# FASCICULE DE BREVET EUROPEEN

(11) **EP 4 130 867 B1**
(45) Date de publication et mention de la délivrance du brevet: **17.04.2024**
(21) Numéro de dépôt: 22188139.4
(22) Date de dépôt: 01.08.2022
(51) Int. Cl.: G03B 7/091, G03B 41/00, G02B 17/06, G02B 23/06, G06T 1/00

(54) **PROCEDE D'ACQUISITION D'IMAGE D'AU MOINS UN ASTRE ET APPAREIL POUR LA MISE EN OEUVRE DU PROCEDE**
VERFAHREN ZUR ERFASSUNG EINES BILDES VON MINDESTENS EINEM STERN UND GERÄT ZUR DURCHFÜHRUNG DES VERFAHRENS
METHOD FOR IMAGE ACQUISITION OF AT LEAST ONE STAR AND DEVICE FOR IMPLEMENTING THE METHOD

(30) Priorité: 02.08.2021 FR 2108394
(43) Date de publication de la demande: 08.02.2023
(73) Titulaire: Unistellar, 13001 Marseille (FR)
(72) Inventeur: MALVACHE, Arnaud, 13710 FUVEAU (FR); BOROT, Antonin, 13008 MARSEILLE (FR)
(74) Mandataire: Roman, Alexis

(56) Documents cités:
- RU-C1- 2 574 522
- US-A- 5 745 869
- US-A1- 2003 218 686

## Description

### Domaine technique.

L'**invention** a pour objet un **procédé d'acquisition d'image d'un** ou plusieurs astres. Elle concerne également un **appareil de capture d'image comportant** une pluralité de configurations de capteurs optiques interchangeables pour la mise en **œuvre de ce procédé.**

L'invention se rapporte au domaine technique des appareils de prise de vue et notamment à celui des télescopes (ou lunettes astronomiques).

### État de la technique.

Un télescope est destiné à observer des astres tels que des planètes, des comètes, des nébuleuses, des galaxies, et de manière générale des objets célestes proches ou lointains. Le télescope est notamment utilisé par les astronomes bien que son utilisation se soit démocratisée depuis quelques **années et que l'observation des étoiles soit devenue une passion pour de** nombreuses personnes de différentes générations. Afin de répondre à la demande des consommateurs de plus en plus nombreux, les fabricants ont dû **diversifier ces instruments pour répondre à la demande d'un public plus large.**

Un utilisateur souhaitant observer à la fois des astres de grande taille (ex : nébuleuses, galaxies) et des astres de petite taille (ex : planètes, lune) doit posséder plusieurs oculaires. C'**est en changeant d'oculaire que l'utilisateur peut** adapter le grossissement **en fonction de la nature de l'astre observé.** En effet, les astres de grande taille sont généralement peu lumineux et leur observation nécessite un faible grossissement. À **l'inverse, les** astres plus petits sont généralement plus lumineux et leur observation doit être réalisée avec un grossissement plus fort. **En pratique, ce changement d'oculaires est particulièrement contraignant pour l'utilisateur.**

**Un objectif de l'invention est de remédier aux inconvénients précités.**

**Un autre objectif de l'invention est** de proposer une technique permettant **d'acquérir**, avec un seul appareil, **une image d'un astre**, avec une bonne résolution, **que l'astre soit de grande taille et sombre ou de petite taille et** lumineux.

**Encore un autre objectif de l'invention est de** proposer un appareil pour **l'acquisition d'image d'un ast**re de sombre ou lumineux, dont la conception est **simple, facile d'utilisation et peu onéreux.**

**On connaît dans l'état de la technique le document** US 20150028212 qui décrit un appareil **cherchant à suivre le trajet d'un missile en effectuant, selon les** besoins, un plan large et un plan serré de celui-ci. Compte tenu de son objet qui **vise à l'acquisition d'image d'un objet circulant dans l'atmosphère terrestre, un tel** document technique n**e présente rien de commun avec le procédé et l'appareil d'acquisition d'image d'un astre selon la présente invention.** On peut aussi citer RU2574522C1 dans l'état de la technique, qui décrit un procédé d'acquisition d'image d'un astre.

### Présentation de l'invention.

**La solution proposée par l'invention est** un procédé **d'acquisition d'image d'au** moins un astre, comportant les étapes suivantes :
- **utiliser un appareil comportant un corps creux à l'intérieur duquel pénètrent, en usage, des rayons lumineux provenant d'au moins un astre observé, ledit astre observé étant choisi parmi au moins un premier astre d'une première nature** et **un deuxième astre d'une deuxième nature, la nature du premier astre étant** différente de la nature du deuxième astre,
- agencer, dans le corps creux, un système optique présentant un axe optique, lequel système optique est configuré de sorte que les rayons lumineux forment, **dans un foyer image situé dans un plan focal, une image de l'astre observé,**
- agencer dans le foyer image une matrice de capteurs optiques pour acquérir **l'image de l'astre observé, laquelle matrice présente une pluralité n de pixels** unitaires P₁,
- définir une première configuration de capteurs optiques de la matrice pour **acquérir l'image du premier astre de première nature, ladite première** configuration présentant la pluralité n de pixels unitaires P₁, n étant un nombre entier naturel,
- définir au moins une deuxième configuration de capteurs optiques de la matrice **pour acquérir l'image du deuxième astre de deuxième nature, ladite deuxième** configuration présentant une pluralité m₂ de macro-pixels P₂ formés par des regroupements de pixels unitaires P₁, m₂ étant un nombre entier naturel,
- **sélectionner une des configurations de capteurs optiques pour acquérir l'image de l'astre formée dans le foyer image, la sélection de la configuration de capteurs** optiques étant réalisée en fonction de **la nature de l'astre observé, soit le susdit** premier astre de première nature soit le susdit deuxième astre de deuxième nature.

**Dans le cadre de la présente invention, on entend par l'expression «** astre de nature différente » en lien avec le premier et le deuxième astre, le fait que ces deux astres présentent une taille et/ou une luminosité différente. Ainsi, une telle nature différente de ces deux astres signifie que chacun présente une nature propre, du point de vue de sa taille et/ou de sa luminosité.

**Ainsi, la nature de l'astre ne renvoie pas ici spécifiquement au fait que l'astre susceptible d'être observé par la première** configuration de capteurs optiques et la deuxième configuration de capteurs optiques **n'est pas identique en** termes **d'objet** céleste. **De façon plus précise et à titre d'exemple, deux planètes de taille** sensiblement identique **n'appartenant** pas à un même système solaire ou à une même galaxie sont des objets célestes identiques. Pour autant, dans le cadre de la présente invention, ces deux planètes ne seront pas considérées comme des astres de même nature, compte tenu du fait que leur luminosité, depuis la terre, **n'est pas la même.**

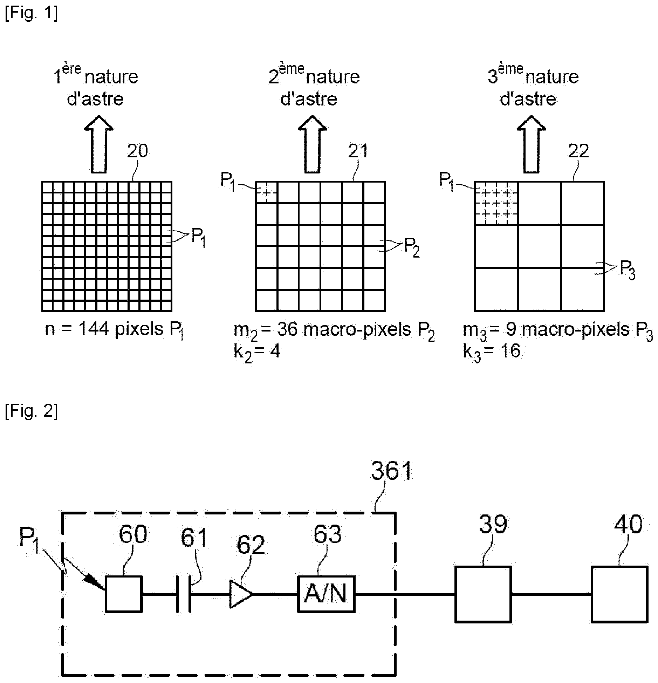

Un macro-pixel désigne un groupe de plusieurs pixels unitaires. **Si l'on applique cette définition à l'exemple** de la figure 1, la première configuration de capteurs optiques présente des pixels P₁ (unitaires) tandis que la deuxième configuration et la troisième configuration de capteurs optiques présentent des macro-pixels respectivement P₂ et P₃. Les signaux délivrés par les pixels unitaires d'un macro-pixel sont considérés comme un unique signal global à traiter. Ce signal est représentatif du rayonnement capturé au niveau de **l'ensemble du macro**-pixel.

**Concernant le critère de luminosité, relativement à la nature de l'astre** considéré, celui-ci renvoie à la magnitude de cet astre, observé depuis la surface de la **Terre. On sait que les astres visibles à l'oeil nu présentent une magnitude** apparente inférieure à 6, avec à **titre d'exemple l'étoile Vega** présentant une magnitude égale à 0 et le soleil de notre système solaire une magnitude égale à - 27, **l'un et l'autre** étant observés depuis la surface terrestre. À **l'opposé, les astres** les moins visibles présentent une magnitude apparente supérieure à 6.

La magnitude considérée est avantageusement une magnitude apparente ou une brillance de surface, **bien connue de l'homme du métier, cette dernière étant** plus pertinente pour des objets célestes étendus tels que des galaxies ou des nébuleuses.

Ainsi, dans le cadre de la présente invention, on peut prévoir une pluralité de configurations de capteurs optiques, chacune destinée à observer des astres dans un domaine de magnitudes propres. À **titre d'exemple,** le système **d'acquisition d'images selon l'invention comprend** une matrice comprenant quatre configurations de capteurs optiques distinctes :
- la première configuration de capteurs optiques présentant des pixels unitaires P₁ **d'une taille adaptée pour l'acquisition d'images d'**astres de magnitude apparente inférieure à 0,
- la deuxième configuration de capteurs optiques présentant des macro-pixels P₂ **d'une taille adaptée pour l'acquisition d'images d'**astres de magnitude apparente comprise entre 0 et 6 (borne supérieure comprise),
- la troisième configuration de capteurs optiques présentant des macro-pixels P₃ **d'une taille adaptée pour l'acquisition d'images d'**astres de magnitude apparente comprise entre 6 et 14 (borne supérieure comprise), et
- la quatrième configuration de capteurs optiques présentant des macro-pixels P₄ **d'une taille adaptée pour l'acquisition d'images d'**astres de magnitude apparente supérieure à 14.

**Dans la suite de la présentation de l'invention, par souci de simplification, on** considère e**ssentiellement deux natures différentes d'astres consistant d'une part** en une planète de notre système solaire considérée comme un astre de petite taille présentant une forte luminosité (dont la magnitude apparente est par exemple inférieur à 6) **et d'autre** part une nébuleuse, ou amas de galaxies, considérée comme un astre de grande taille présentant une faible luminosité (dont la magnitude apparente est par exemple supérieure à 6).

Pour autant, la présente invention ne se limite pas à définir deux natures **d'astres, par exemple en distinguant des astres de petite taille fortement lumineux et des astres de grande taille faiblement lumineux. Ainsi, l'invention peut définir bien plus que deux natures d'astres -** correspondant à autant de configurations de capteurs optiques - pour catégoriser les astres observés en fonction de leur taille et/ou de leur luminosité.

L'**utilisation** de plusieurs configurations de capteurs optiques par regroupement de pixels **permet à l'utilisateur de visualiser avec un même** appareil des astres de nature différente. Pour acquérir, avec une bonne **résolution, une image d'un astre peu lumineux, une première** configuration de **capteurs est sélectionnée. L'autre** configuration de capteurs sera sélectionnée pour acquérir **l'image d'un astre plus lumineux.** Ainsi, **que l'astre soit sombre ou** lumineux, **les coûts de fabrication, d'achat, d'entretien et de manutention d'un tel** appareil sont fortement réduits.

**Le fait d'utiliser** au moins deux configurations de capteurs optiques - à partir de pixels unitaires et regroupements desdits pixels unitaires - permet de **s'affranchir de l'utilisation de** différentes optiques, pour observer des astres lumineux ou peu lumineux. Ainsi, **l'invention permet** de sélectionner **alternativement l'une ou l'autre des** configurations de capteurs, en fonction de la nature de **l'astre que l'utilisateur** désire observer.

D'autres caractéristiques avantageuses du procédé objet de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation, la deuxième configuration de capteurs optiques est définie selon la formule m₂=n/k₂ avec k₂ un nombre entier naturel supérieur ou égal à 2.
- Selon un mode de réalisation, la deuxième configuration de capteurs optiques est définie selon la formule m₂=n/p₂² avec p₂ un nombre entier naturel supérieur ou égal à 2.
- Selon un mode de réalisation, le procédé comprend les étapes consistant à : - **acquérir une image de l'astre observé au moyen de la matrice de capteurs** optiques, et générer une représentation numérique de ladite image ; - analyser **la représentation numérique pour calculer une valeur de la luminosité de l'astre** observé ; - et dans lequel la sélection de la configuration de capteurs optiques **est réalisée automatiquement en fonction du résultat d'une comparaison de cette** valeur calculée avec une ou des valeurs seuils préenregistrées ou avec un ou des domaines de magnitudes seuils préenregistrés.
- Selon un mode de réalisation, le procédé comprend les étapes consistant à : - **acquérir une image de l'astre observé au moyen de la matrice de ca**pteurs optiques, et générer une représentation numérique de ladite image ; - analyser **la représentation numérique pour calculer une valeur de la taille de l'astre** observé ; - et dans lequel la sélection de la configuration de capteurs optiques est réalisée automatiquement en fonction de la valeur calculée de la luminosité **de l'astre observé en la comparant à une ou des valeurs seuils préenregistrées** ou à un ou des domaines de magnitudes seuils préenregistrés.
- Selon un mode de réalisation, le procédé comprend les étapes consistant à : - **acquérir une image d'un premier astre de première nature et d'un deuxième astre de deuxième nature au moyen de la matrice de capteurs optiques, l'image** de chaque astre étant située dans une zone distincte de ladite matrice ; - **générer une représentation numérique de l'image acquise** ; - analyser la représentation numérique pour déterminer la première nature du premier astre et la deuxième nature du deuxième astre ; - sélectionner automatiquement la première configuration de capteurs optiques dans la zone de la matrice où est **située l'image du premier astre de première nature et la deuxième configuration de capteurs optiques dans la zone de ladite matrice où est située l'image du** deuxième astre de deuxième nature, lesdites configurations étant sélectionnées simultanément.
- Selon un mode de réalisation, le procédé les étapes consistant à : - **enregistrer, dans une base de données, des enregistrements d'astres, chaque** enregistrement étant associé à une configuration de capteurs optique**s ainsi qu'à des données de localisation en temps réel de l'astre et/ou à au moins un élément caractéristique de l'astre ; -** sélectionner, dans la base de données, un **enregistrement d'astre** ; - sélectionner la configuration de capteurs optiques associée à l'**enregistrement d'astre sélectionné** ; - orienter automatiquement **l'appareil vers la localisation de l'astre, en fonction des données de localisation associées à l'enregistrement sélectionné.**
- Selon un mode de réalisation, le procédé comprend les étapes consistant à : - **acquérir une image d'un astre observé dans une scène d'observation** correspondant à une portion de la voute céleste, laquelle acquisition est réalisée **au moyen d'une des configurations de capteurs optiques sélectionnée en** fonction de la nature dudit astre ; - exécuter un processus informatique configuré **pour détecter le déplacement d'un autre astre dans la scène d'observation ; - sélectionner l'autre configuration de capteurs optiques correspondant audit autre** astre.
- Selon un mode de réalisation, le procédé comprend les étapes consistant à : - **enregistrer, dans une base de données, des enregistrements d'astres, chaque** enregistrement étant associé à une des configurations de capteurs optiques et à **au moins un élément caractéristique de l'astre** ; - **acquérir une image d'un astre, laquelle acquisition est réalisée au moyen d'une des configurations de capteurs** optiques ; - exécuter un processus informatique de reconnaissance configuré **pour détecter, dans l'image acquise, au moins un élément caractéris**tique dudit astre ; **- identifier, dans la base de données, un enregistrement d'astre associé à** un élément caractéristique similaire à celui détecté ; - sélectionner la **configuration de capteurs optiques associée à l'enregistrement identifié** ; - si la confi**guration de capteurs optiques ayant acquise l'image ne correspond pas à la** configuration de capteurs optiques sélectionnée, alors sélectionner cette dernière configuration de capteurs.

**Un autre aspect de l'invention concerne un** appareil **pour l'acquisition d'image d'un astre, comportant :**
- **un corps creux à l'intérieur duquel pénètrent, en usage, des rayons lumineux provenant d'au moins un astre observé, ledit astre observé étant choisi parmi au moins un premier astre d'une première nature et un deuxième astre d'une** deuxième nature, la nature du premier astre étant différente de la nature du deuxième astre,
- un système optique agencé dans le corps creux et présentant un axe optique, lequel système est configuré de sorte que les rayons lumineux forment, dans un **foyer image situé dans un plan focal, une image de l'astre observé,**
- une matrice de capteurs optiques, disposée dans le foyer image, consistant en une pluralité n de pixels unitaires P₁,
- une première configuration de capteurs optiques de la matrice pour acquérir **l'image du premier astre de première nature, ladite première configuration** présentant la pluralité n de pixels unitaires P₁, n étant un nombre entier naturel,
- une deuxième configuration de capteurs optiques de la matrice pour acquérir l'image du deuxième astre de deuxième nature, ladite deuxième configuration présentant une pluralité m₂ de macro-pixels P₂ formés par des regroupements de pixels unitaires P₁, m₂ étant un nombre entier naturel,
- une unité de traitement adaptée pour sélectionner une des configurations de **capteurs optiques pour acquérir l'image de l'astre formée dans le foyer image, la** sélection de la configuration de capteurs optiques étant réalisée en fonction de la **nature de l'astre observé, soit le susdit premier astre de pr**emière nature soit le susdit deuxième astre de deuxième nature.

D'autres caractéristiques avantageuses **de l'appareil objet de** l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation, les macro-pixel P₂ ont la même forme au sein de la deuxième configuration de capteurs optiques.
- Selon un mode de réalisation, les macro-pixel P₂ ont des formes différentes au sein de la deuxième configuration de capteurs optiques.
- Selon un mode de réalisation, **l'unité de traitement est adaptée pour** sélectionner simultanément la première configuration de capteurs optiques dans **une zone de la matrice où est située l'image d'un premier astre de première** nature et la deuxième configuration de capteurs optiques dans une zone de **ladite matrice où est située l'image d'un deuxième astre de deux**ième nature.
- Selon un mode de réalisation, chaque pixel unitaire P₁ délivre un signal représentatif d'une intensité lumineuse reçue, la matrice intègre un circuit sommateur adapté pour sommer les signaux générés par les pixels unitaires P₁ **d'un macro**-pixel P₂ de sorte que les signaux délivrés par lesdits pixels unitaires d'un macro-pixel P₂ soient considérés comme un unique signal global à traiter **par l'unité de traitement.**
- **Selon un mode de réalisation, l'appareil se** présente **sous la forme d'un** télescope (lunette astronomique).

### Brève description des figures.

D**'autres avantages et caractéristiques de l'invention apparaîtront mieux à la lecture de la description d'un mode de réalisation préféré qui va suivre, en** référence aux dessins annexés, réalisés à titre **d'exemples indicatifs et non** limitatifs et sur lesquels :
[Fig. 1] est un schéma illustrant un exemple de trois configurations de capteurs **optiques d'une matrice, ces trois configurations étant conformes à l'invention.**
[Fig. 2] illustre de manière schémati**que un agencement de composants d'un** pixel unitaire.
[Fig. 3] illustre une manière de traiter les signaux de pixels unitaires lorsque la matrice est dans une première configuration de capteurs optiques.
[Fig. 4a] illustre une première manière de traiter les signaux de pixels unitaires formant des macro-pixels lorsque la matrice est dans une deuxième configuration de capteurs optiques.
[Fig. 4b] illustre une deuxième manière de traiter les signaux de pixels unitaires formant des macro-pixels lorsque la matrice est dans une deuxième configuration de capteurs optiques.
[Fig. 4c] illustre une troisième manière de traiter les signaux de pixels unitaires formant des macro-pixels lorsque la matrice est dans une deuxième configuration de capteurs optiques.
[Fig. 5] **schématise un exemple d'agencement de macro-**pixels de différentes formes.
[Fig. 6a] illustre une première manière de traiter les signaux de pixels unitaires formant des macro-pixels lorsque la matrice est dans une troisième configuration de capteurs optiques.
[Fig. 6b] illustre une deuxième manière de traiter les signaux de pixels unitaires formant des macro-pixels lorsque la matrice est dans une troisième configuration de capteurs optiques.
[Fig. 6c] illustre une troisième manière de traiter les signaux de pixels unitaires formant des macro-pixels lorsque la matrice est dans une troisième configuration de capteurs optiques.
[Fig. 7] **schématise un exemple d'agencement de pixels unitaires et de macro-**pixels de différentes tailles.
[Fig. 8] est une vue en **coupe schématisant un appareil de capture d'image** conforme à **l'invention,** selon un premier mode de réalisation, la matrice étant dans une première configuration de capteur optiques.
**[****Fig. 9****] montre l'appareil de la** **figure 8** **avec la matrice dans une deuxiè**me configuration de capteur optiques.
**[****Fig. 10****] est une vue en coupe schématisant un appareil de capture d'image conforme à l'invention, selon un deuxième mode de réalisation.**
**[****Fig. 11****] est une vue en coupe schématisant un appareil de capture d'image** confo**rme à l'invention, selon un troisième mode de réalisation.**

### Description des modes de réalisation.

Par souci de clarté, la présente invention fait référence à un ou plusieurs « *processus informatiques* ». Ces derniers correspondent aux actions ou résultats **obtenus par l'exécution d'instructions de différentes applications informatiques. Aussi, il faut également comprendre au sens de l'invention que** « *un processus informatique est adapté pour faire quelque chose* » signifie « *les **instructions d'une application** informatique exécutées par une unité de traitement font quelque chose* ».

**Tel qu'utilisé ici, sauf indication contraire, l'utilisation des adjectifs ordinaux «** *premier* », « *deuxième* », etc., pour décrire un objet indique simplement que différentes occurren**ces d'objets similaires sont mentionnées et n'implique pas** que les objets ainsi décrits doivent être dans une séquence donnée, que ce soit dans le temps, dans l'espace, dans un classement ou de toute autre manière.

**L'appareil 30 objet de l'invention est utilisé pour l'observation à la fois d'astres de grande taille et d'astres de petite taille. Ces astres ou objets ou corps célestes peuvent être des planètes, des étoiles, des nébuleuses, des galaxies, etc. Il s'agit préférentiellement d'un télescope** (ou lunette astronomique), **mais l'appareil peut également se présenter sous la forme d'un appareil photographique ou d'une caméra vidéo. Par souci de clarté, et à titre d'exemple illustratif seulement, la** suite de la description fait seulement référence à un télescope adapté pour **l'observation d'astres de nature différente, notamment des astres de petite taille** 50 relativement lumineux (ex : planètes, lune) et des astres de grande taille 51 plus sombres (ex : nébuleuses, galaxies).

Sur les figures annexées 8 à 11, le télescope 30 comprend notamment un **corps creux 302 à l'intérieur duquel pénètrent, en usage, des rayons lumineux 34 provenant de l'astre 50, 51 observé. Le corps creux 302 présente une première** 300 extrémité par laquelle pénètrent les rayons lumineux 34 et une seconde extrémité 301 opposée à ladite première extrémité.

**Le corps creux 302 se présente préférentiellement sous la forme d'un tube** creux de section circulaire, mais pourrait être un tube de section ovale, carrée octogonale ou autre. Il est pr**écisé que le corps creux 302 n'est pas** nécessairement de forme tubulaire, mais peut être de forme conique, ou formé de portions de tubes ou de cônes par exemple. Le corps creux 302 peut être réalisé en matériau plastique, en matériau composite, etc. À titr**e d'exemple, sa** longueur est comprise entre 200 mm et 400 mm, son diamètre est compris entre 50 mm et 500 mm et son épaisseur est comprise entre 1 mm et 10 mm.

Un système optique 31, 382, 383 est agencé dans le corps creux 302 possédant un axe optique 32. Le système optique est configuré de sorte que les **rayons lumineux 34 forment, dans un plan focal 33, une image de l'astre 50, 51** observé.

Le télescope présente un axe optique 32. Au sens de la présente invention, on entend par axe optique, la ligne qui passe par le centre de chaque élément **optique du système optique 31, 382, 383. L'axe optique 32 est un axe rectiligne confondu avec l'axe de symétrie du télescope 30. D'autres configurations sont toutefois envisageables, dans lesquelles l'axe optique 32 est** non rectiligne et se **décompose en un axe optique principal (confondu avec l'axe de symétrie) et par** un axe optique secondaire.

**Le télescope présente un foyer image 330 à l'intersection entre l'axe optique** 32 et les rayons lumineux 34. Le foyer image 330 est dans le plan focal 33.

Une matrice de capteurs optiques 361 est agencée dans le foyer image 330 **pour acquérir l'image de l'astre 50, 51 observé, formée dans le**dit foyer image 330.

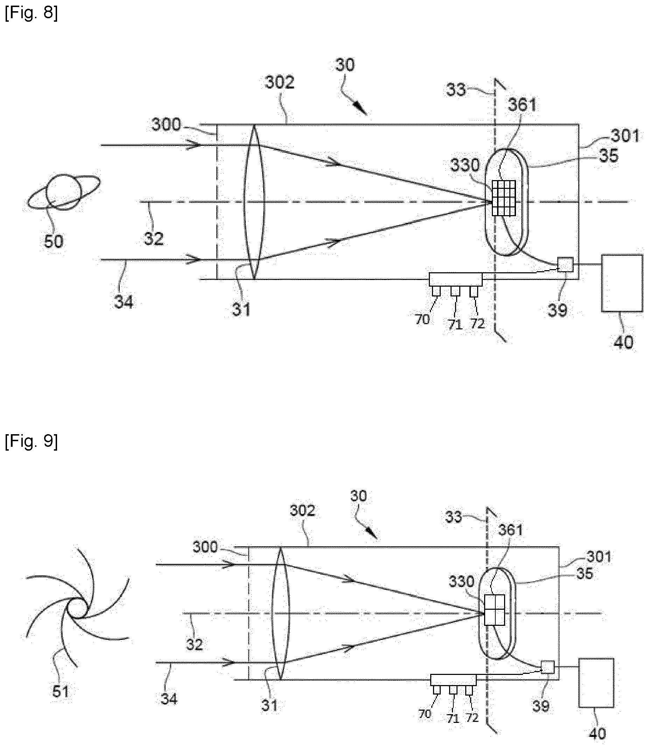

Sur les figures 8 et 9, la matrice 361 est fixée sur un support 35 installé dans le corps creux 302, à proximité de la seconde extrémité 301. Le support 35 peut éventuellement être mobile. Le support 35 est par exemple réalisé en acier, en carbone, ou dans un matériau plastique, de sorte que sa conception soit simple, peu onér**euse et qu'il soit durable dans le temps. Le support 35 est** préférentiellement de forme circulaire, mais peut également être de forme carrée, octogonale, ovale, etc. De manière générale, la forme et les dimensions du support 35 sont adaptées aux dimensions de la matrice 361. À titre d'exemple, sa surface est comprise entre 2 cm² et 8 cm². Ces dimensions réduites permettent d'utiliser un minimum d'espace dans l'appareil 30.

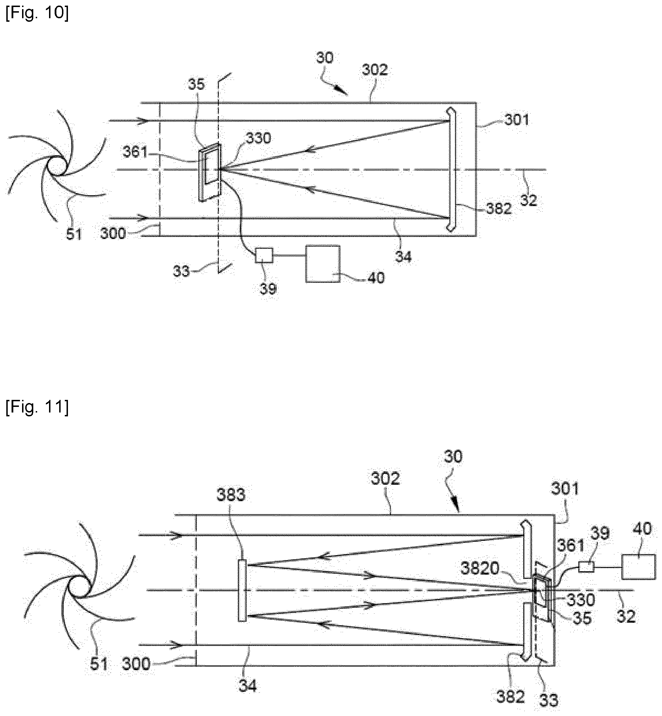

Dans le mode de réalisation de la figure 10, le système optique comprend un miroir primaire 382 disposé dans le corps creux 302, du côté de la seconde extrémité 301. Ce miroir primaire 382 réfléchit et fait converger les rayons lumineux 34 vers le support 35 placé dans le foyer image 330. Le support 35 sur lequel est fixée la matrice 361 est préférentiellement disposé dans le premier tiers du corps creux 302, du côté de la première extrémité 300 de manière à ne pas interférer avec les rayons lumineux tangents réfléchis par le miroir primaire 382.

Dans le mode de réalisation de la figure 11, le système optique comporte :
- un miroir primaire 382 positionné dans le corps creux 302, pour réfléchir les rayons lumineux 34 pénétrant dans ledit corps,
- un miroir secondaire 383 positionné dans le corps creux 302 pour réfléchir les rayons lumineux réfléchis par le miroir primaire 382.

Un tel système optique permet de réduire la longueur du corps creux 302, tout en **gardant la même longueur focale d'un télescope comportant seulement un miroir primaire 382 (tel qu'illustré sur la** **figure** 10 par exemple).

**Le miroir primaire 382 et le miroir secondaire 383 sont sur l'axe optique 32 qui coïncide avec l'a**xe de symétrie dudit corps creux 302. Ces miroirs sont à réflexion pure. Le miroir primaire 382 est préférentiellement un miroir parabolique concave ayant un rapport focal faible (préférentiellement inférieur à 5). Ce type **de miroir permet de s'affranchir** des aberrations sphériques. Le diamètre du miroir primaire 382 correspond sensiblement au diamètre interne du corps creux 302. Ce miroir primaire 382 présente en son centre une ouverture 3820 coaxiale **à l'axe optique 32. Le miroir primaire 382 est disposé** à proximité de la seconde extrémité 301 du corps creux 302. Le miroir secondaire 34 est positionné dans le **corps creux 302, au niveau de la première extrémité 300. L'installation du miroir secondaire 383 à l'intérieur du corps creux 302 permet de préserver** son intégrité physique lors de la manutention et de la manipulation du télescope 30.

Le miroir secondaire 383 est adapté pour ramener le plan focal 33 derrière le miroir primaire 382, les rayons lumineux réfléchis passant au travers de **l'ouverture 3820. C**ette conception permet de diminuer la longueur focale et la longueur du corps creux 302 et, de fait, de réduire le rapport focal tout en conservant un miroir primaire 382 ayant un diamètre relativement élevé. Le télescope 30 est donc particulièrement léger et compact. Le miroir secondaire 383 peut être concave ou convexe. Toutefois, on utilise préférentiellement un **miroir plan. L'utilisation d'un miroir plan offre plusieurs avantages. Il permet de** ramener par symétrie, le plan focal 33 derrière le miroir primaire 382 et, partant, **la longueur focale du système optique. C'est également un miroir dont la conception est simple et peu onéreuse. Le coût global du télescope 30 s'en trouve donc réduit. De plus, l'alignement d'un miroir plan 383 avec le miroir** primaire 382 est plus simple à réaliser, ce qui limite le temps de montage et les coûts de main-**d'oeuvre. L'utilisation d'un miroir plan permet encore d'utiliser un** miroir secondaire dont le diamètre est nettement inférieur à celui du miroir primaire 382, de sorte que ledit miroir primaire occulte peu les rayons lumineux 34 pénétrant dans le corps creux 32.

Pour réduire la perte de luminosité et améliorer la résolution, un miroir secondaire 383 plan de plus petit diamètre est utilisé. Selon un mode avantageux de réalisation, le miroir secondaire 383 a un diamètre égal à la moitié du diamètre du miroir primaire 382. Ainsi, seule une faible partie de la surface du miroir primaire 382 et de la première extrémité 300 sont obstruées. Une quantité suffisante de lumière est alors susceptible de pénétrer dans le télescope 30 et **être réfléchie par le miroir primaire 382 de sorte qu'un utilisateur peut** correctement observer les astres de grande taille, peu lumineux. À titre **d'exemple, le diamètre du miroir secondaire 383 est** compris entre 25 mm et 250 mm pour un miroir primaire 382 ayant un diamètre compris entre 50 mm et 500 mm.

**La matrice 361 est disposée dans le foyer image 330, de sorte qu'elle n'interfère ni avec les rayons lumineux 34 réfléchis par le miroir primaire 382** et ni avec les rayons lumineux réfléchis par le miroir secondaire 383. On optimise ainsi la lumière collectée par la matrice 361 et on minimise la perte de résolution **due à la présence du miroir secondaire 383. En outre, l'accès à la matrice 361** est plus aisé de sorte que son installation et/ou son remplacement sont plus rapides et plus faciles, sans avoir à manipuler et/ou à dérégler le système optique 382, 383.

**Selon une variante de réalisation, la matrice 361 est celle d'un terminal mobile** utilisateur, préférentiellement un téléphone intelligent (smartphone) ou une tablette, fixé de manière amovible sur le corps creux 302, au niveau de la seconde extrémité 301.

Dans le cadre de la présente invention, il **est également possible d'envisager** plusieurs matric**es de capteurs optiques permettant d'obtenir**, en combinaison, avec le fait pour chaque matrice 361 de présenter une pluralité de configurations de capteurs optiques, une gamme plus large de résolution de manière à ce que non seulement **l'utilisateur puisse observer une** encore plus grande catégorie **d'astres**, mais encore **d'affiner la résolution en fonction de la nature de l'astre** observé. **Dans l'hypothèse où on utilise une pluralité de matrices, celle**-ci présente avantageusement des tailles différentes. En effet, la taille d'**une** matrice influe sur le champ de vue. Bien entendu, chacune de ces matrices peut se caractériser par une taille de matrice, une taille des pixels, et un nombre de pixels qui leur est propre.

Néanmoins, dans la suite, on considère avantageusement une unique matrice **qui dispose d'une pluralité de configurations de capteurs optiques** 20, 21, 22, ce **qui permet d'observer autant de catégories d'astres qu'il y a de configurations de** capteurs optiques, avec une seule et unique matrice 361.

Ainsi, selon la présente invention, la matrice 361 comprend des configurations de capteurs optiques 20, 21, 22 différentes de manière à être adaptée à **l'observation d'astres 50, 51 de nature différente.** Comme on le décrit dans la suite, ces configurations 20, 21, 22 différentes de capteurs optiques renvoient à un regroupement de pixels différents, classiquement depuis une taille de pixels unitaires P₁ **jusqu'à une taille de** macro-pixels formés chacun par un **regroupement d'un certain nombre de ces pixels unitaires. Chaque configuration** de pixels 20, 21, 22 est adaptée **à un type d'astre à observer. En effet, la taille** des pixels et macro-pixels et leur nombre influent sur la résolution et sur la sensibilité **du procédé et de l'appareil d'acquisition d'image d'un astre.**

**De manière générale, c'est la taille de la matrice** 361 qui détermine le champ de vue. En effet, plus la matrice 361 est grande, plus la portion de ciel observée est large. Il sera donc possible **d'observer des astres étendus comme des** nébuleuses ou des astres du ciel profond. À **l'inverse, avec une matrice** 361 plus petite, la portion de ciel observée sera davantage réduite. Le champ de vue étant restreint, on pourra observer des astres plus petits tels que des planètes.

À nouveau, le but de la présente invention est de couvrir avec une seule et **unique matrice 361 l'ensemble des possibilités d'observation d'astres, depuis** des **astres lumineux jusqu'à des astres peu lumineux.** Comme exposé précédemment, **le principe d'une pluralité de configurations 20, 21, 22 de** capteurs optiques **peut se combiner avec l'utilisation d'une pluralité de matrices** 361 pour autant **qu'au moins une matrice 361 dispose de cette pluralité de** configurations 20, 21, 22 de capteurs optiques. Ainsi, **à titre d'exemple** la taille de la matrice 361 (unique) est comprise entre 1 millimètre carré (mm²) et 1000 mm², de préférence entre 5 mm² et 50 mm².

La résolution optique du télescope 30 est généralement définie par la dimension du miroir ou de la lentille du système optique 31. La taille des pixels de la matrice 361 **de capteurs détermine la résolution numérique de l'image** observée et indirectement la possibilité de zoomer. En effet, plus la taille des pixels diminue, plus la résolution numérique augmente. Et en augmentant la résolution numérique, il est possible de réaliser un agrandissement de bonne **qualité d'une partie de l'image observée.** À **l'invers**e, si la résolution numérique **est basse, l'agrandissement sera de** moins bonne qualité. La résolution du **télescope numérique est déterminée par l'élément le moins résolu entre l'optique et la matrice de capteur. Il n'est donc pas intéressant d'utiliser une** taille de pixels plus petite que la résolution optique du télescope 30.

La taille des pixels a également une incidence sur la sensibilité à la lumière. Des pixels de petite taille sont peu sensibles. À **l'inverse, des pixels de grande** taille sont plus sensi**bles. Si l'utilisateur observe un astre de petite taille 50, comme une planète par exemple qui est très lumineuse, il n'est pas nécessaire d'avoir une forte sensibilité. L'observation des astres de petite taille 50 peut donc** se faire avec des pixels de petite taille ayant une faible sensibilité de sorte que **l'on se concentre sur la résolution numérique qui permet d'observer des détails** de la surface de la planète (ex : tempêtes, cratères, etc). À l'inverse, si **l'utilisateur observe un astre de grande taille** 51, comme une nébuleuse par **exemple qui est peu lumineuse, il est avantageux d'avoir une forte sensibilité à la lumière. Ces astres étant de grande taille, il n'est pas nécessaire d'avoir une très** haute résolution pour y observer des détails (nuages de gaz, bras de galaxies).

La matrice 361 est préférentiellement un **capteur CCD (pour l'acronyme anglais Charged Coupled Device) ou CMOS (pour l'acronyme anglais** Complementary Métal Oxide Semiconductor) comportant un agencement de pixels (permettant de générer des images, préférentiellement des images couleur). Ce type de matrice a des dimensions réduites, ce qui permet de **l'installer aisément dans un télescope** ou analogue.

La matrice 361 présente une pluralité n de pixels P₁ identiques ou similaires, par exemple agencés selon des lignes et des colonnes, où n est un entier naturel non nul dont la valeur dépend de la taille de ladite matrice. Selon un mode de réalisation, le nombre « n » est compris entre 10⁵ (cent mille pixels) et 10⁹ (un milliard de pixels), de préférence entre 10⁶ (un million) et 10⁸ (cent millions). Dans le cadre de la présente invention, on considère que la taille des pixels P₁, **ou pixels "unitaires", est** compris entre 0,1 µm et 20 µm, de préférence comprise entre 0,5 µm et 10 µm. On entend par le terme de « taille », en lien avec un pixel, **le fait qu'un côté d'un pixel -** classiquement de forme carrée ou polygonale - présente la taille définie.

Chaque pixel unitaire P₁ est un composant photosensible adapté pour convertir, par effet photoélectrique, un rayonnement électromagnétique en un signal électrique. **La** **figure 2** **illustre de manière schématique, et à titre d'exemple explicatif seulement, un agencement de composants d'un pixel unitaire** P₁. Celui-ci comporte un élément de conversion photoélectrique 60, par exemple une photodiode, apte à générer un photocourant représentatif d'une intensité lumineuse reçue. Il comporte en outre un élément capacitif 61 de stockage intégrant le photocourant généré par l'élément de conversion photoélectrique 60. La mesure du niveau d'éclairement reçu par un pixel P₁ s'effectue en mesurant une variation de tension aux bornes de l'élément capacitif 61 entre le début et la fin d'une période d'intégration. Le signal résultant subit ensuite une amplification **(par exemple au moyen d'un amplificateur opérationnel** 62) et une numérisation **(par exemple au moyen d'un** convertisseur analogique/numérique 63) pour être converti en signal numérique. Ces différents signaux numériques sont ensuite transmis à une unité électronique de traitement 39 adaptée pour générer une représentation numérique **de l'image de l'astre 50, 51 formée dans le foyer image** 330.

**La connexion entre la matrice 361 et l'unité 39 peut être réalisée de manière** filaire ou sans fil, par exemple selon un protocole de communication de proximité, **tel qu'à titre d'exemples non limitatifs, le protocole Bluetooth^{®}, Wifi^{®}, Zigbee^{®}.** La matrice 361 est reliée **à l**'unité 39 et les données issues de la matrice sont observées sur un écran 40.

Selon un mode de réalisation, l'**unité 39 comprend un calculateur se présentant sous la forme d'un processeur, microprocesseur ou CPU (pour** Central Processing Unit), une mémoire et de manière générale les ressources **informatiques permettant d'assurer le traitement des signaux reç**us de la matrice **361 pour la formation d'une** représentation numérique de **l'image de l'astre** 50, 51 acquise par ladite matrice. Ces composants sont préférentiellement montés sur une carte électronique qui permet de regrouper en un seul endroit, et sur un seul **support, tous les composants électroniques de l'unité 39. Cette conception** permet de minimiser le nombre de cartes électroniques intégrées dans le télescope 30, et de réduire le nombre de câblages. En outre la fabrication de **l'unité 39, son installation** dans le télescope 30 et, le cas échéant, sa **maintenance s'en trouvent grandement facilités.**

La représentation **numérique générée par l'unité 39 est affichée sur un écran 40. L'écran 40 peut être fixé sur la carte électronique, de manière à ce que l'unité** 39 et ledit écran forment un ensemble monobloc facilement manipulable. Dans ce cas, on utilise avantageusement un écran plat, par exemple un écran polychrome à cristaux liquides LCD (pour Liquid Crystal Display) ou OLED (pour Organic Light-Emitting Diode).

**Selon un autre mode de réalisation, l'écran 40 est disjoint de l'unité 39 et la** carte électronique. Il est physiquement distant du corps creux 302. Dans ce **mode de réalisation, l'écran 40 peut être celui d'un terminal mobile de l'utilisateur,** par exemple **l'écran d'un Smartphone (téléphone intelligent) ou d'une tablette tactile. La connexion entre l'unité 39 et l'écran 40 peut être réalisée via une liaison filaire (par exemple au moyen d'un câble USB) ou via une liaison sans fil,** par exemple selon un protoc**ole de communication de proximité, tel qu'à titre d'exemple non limitatif, le protocole Bluetooth,** Wifi, ZigBee. Ce mode de **réalisation permet d'augmenter la compacité du télescope 30 puisque l'encombrement de l'écran 40 n'est pas pris en compte.**

Sur la figure 1, la matrice 361 présente plusieurs configurations de capteurs optiques, **et à titre d'exemple trois configurations référencées** 20, 21 et 22. La première configuration 20 présente la pluralité n de pixels unitaires P₁. On définit arbitrairement que le nombre n est égal à 144 pixels et que la taille de chaque pixel unitaire P₁ est de 10 µm. Bien entendu, cet exemple comporte des valeurs numériques - taille de chaque pixel et nombre de pixels - mais celles-**ci n'ont** aucun caractère limitant dans le cadre de la présente invention.

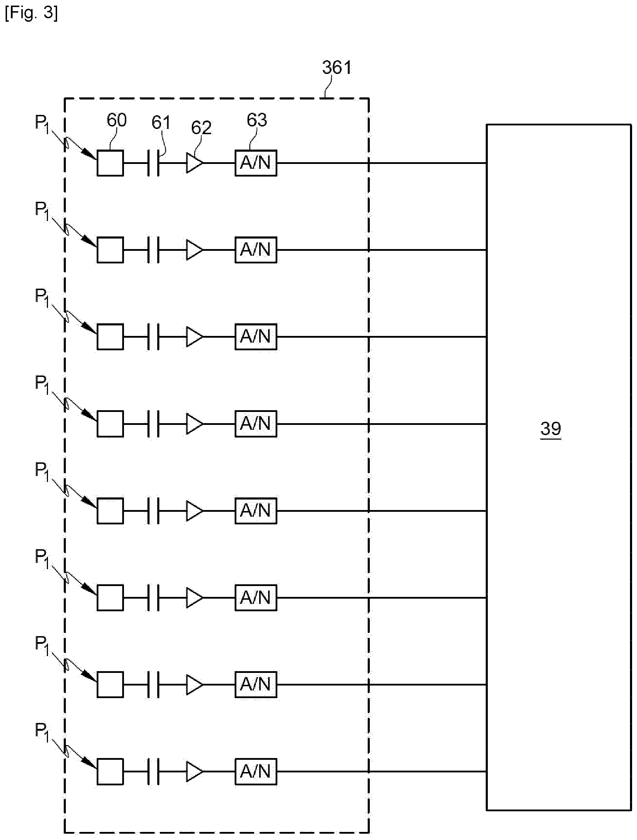

Dans cette première configuration 20, chaque pixel unitaire P₁ fournit un **signal numérique, l'unité de traitement 39 recevant et traitant chacun de ces** signaux. **En d'autres termes, chaque pixel unitaire P**₁ délivre un signal qui est proportionnel au nombre de photons incidents sur ledit pixel unitaire. Ainsi, les signaux délivrés par les pixels unitaires P₁ sont considérés comme des signaux **singuliers à traiter par l'unité de traitement 39.** La figure 3 illustre ce cas. Huit pixels unitaires P₁ sont représentés, chacun de ces pixels transmettant un signal **numérique à l'unité de traitement 39.**

Cette première configuration 20 **est destinée à l'observation d'astres d'une** première nature. Considérant que la taille de la matrice 361 est inchangée, chaque configuration 20, 21 et 22 présente la même taille globale, identique à celle de la matrice 361. Ainsi, comparativement aux autres configurations de capteurs optiques 21 et 22, la première configuration de capteurs optiques 20 présente un grand nombre n de pixels P₁, **chacun d'une petite taille, en l'espèce** égale à la taille unitaire des pixels ; le terme « unitaire » étant ici utilisé pour désigner les pixels de plus petite taille dans une matrice 361. Ainsi, la première configuration de capteurs optiques 20 est dédiée aux astres lumineux, par exemple présentant une magnitude apparente inférieure à 0, **de sorte qu'avec cette première configuration 20, on doit disposer d'une bonne à très** bonne résolution, **mais que la luminosité n'a pas besoin d'être augmentée** significativement.

La deuxième configuration de capteurs optiques 21 présente une pluralité m₂ de macro-pixels P₂ formés par des regroupements de pixels unitaires P₁. Selon un mode de réalisation, on définit le nombre m₂ tel que m₂=n/k₂ avec k₂ un nombre entier naturel supérieur ou égal à 2. Avantageusement, k₂ est inférieur **ou égal à n/16. Dans l'exemple de la** **figure 2****, k₂**=4 de sorte que m₂=36 (144/4). Chaque macro-pixel P₂ est ainsi formé par un regroupement de 4 pixels unitaires P₁. De manière plus générale, chaque macro-pixel P₂ est formé par un regroupement de k₂ pixels unitaires P₁. **La taille d'un macro-**pixel P₂ est alors k₂ **fois la taille d'un pixel unitaire P₁.**

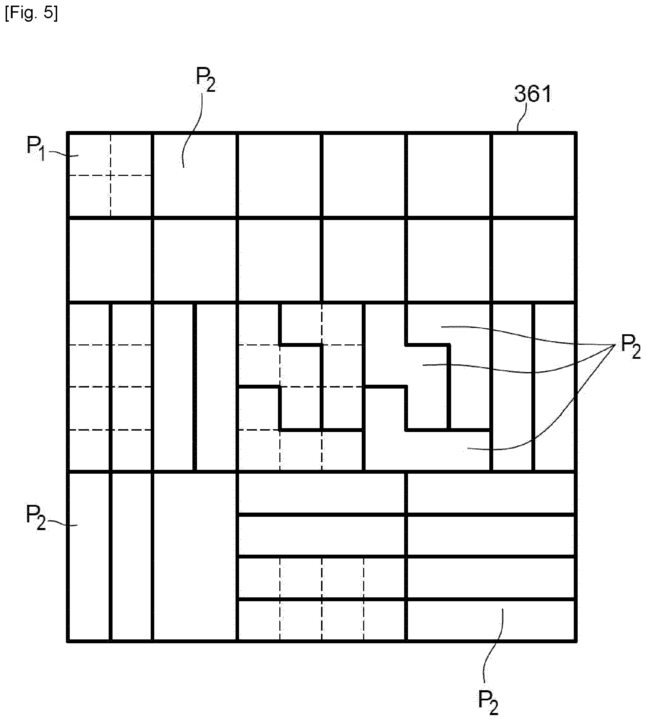

Dans un macro-pixel P₂, les pixels unitaires P₁ peuvent être regroupés sous forme de lignes et de colonnes, lesquelles lignes et colonnes présentent ou pas le même nombre de pixels unitaires P₁. Un macro-pixel P₂ peut ainsi avoir une forme carrée ou rectangulaire. **Pour s'adapter** au mieux à la forme et/ou à la taille **de l'astre** et acquérir de façon optimale son image, un macro-pixel P₂ peut toutefois avoir une autre forme géométrique et les macro-pixels P₂ **n'ont pas** nécessairement la même forme au sein de la deuxième configuration 21 comme illustrée sur la figure 5.

Selon un mode de réalisation, les macro-pixels P₂ sont formés par des regroupements de pixels unitaires P₁ agencés sous forme de lignes et de colonnes, lesquelles lignes et colonnes présentent le même nombre de pixels unitaires. La pluralité m₂ de macro-pixels P₂ est alors définie par m₂=n/p₂² avec p₂ **un nombre entier naturel supérieur ou égal à 2. En d'autres termes, k**₂=p₂². Un tel regroupement **de pixels unitaires permet d'avoir des macro-**pixels de forme carrée ou sensiblement carrée, permettant de générer une représentation **numérique homogène de l'image capturée.**

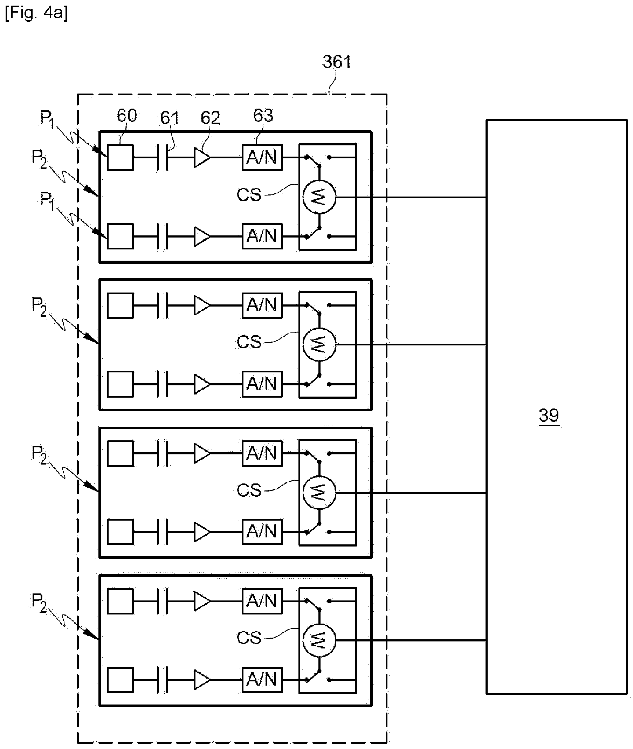

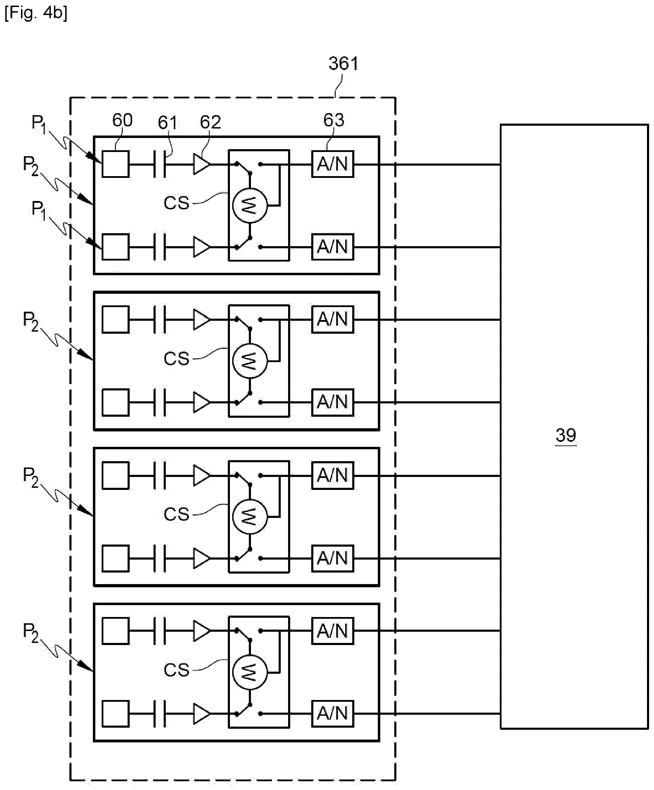

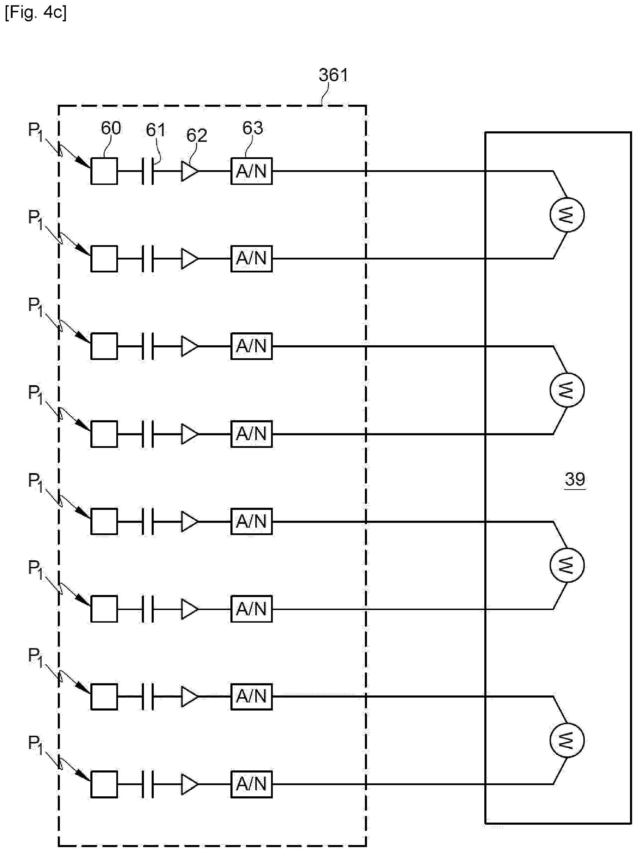

Dans la deuxième configuration 21, les signaux délivrés par les pixels unitaires P₁ d'un macro-pixel P₂ sont considérés comme un unique signal global à traiter **par l'unité de traitement 39.** Ce signal est proportionnel au nombre de **photons incidents sur l'ensemble du groupe de pixels unitaires P**₁ formant le macro-pixel P₂. Les figures 4a, 4b et 4c illustrent différentes façons de traiter les signaux dans le cas de la deuxième configuration 21. Quatre macro-pixels P₂ sont représentés, chacun de ces macro-pixels étant formé par un groupe de deux pixels unitaires P₁.

Dans le mode de réalisation de la figure 4a, les signaux de deux pixels unitaires P₁ **d'un macro-**pixel P₂ sont sommés après numérisation. Cette opération peut par exemple être réalisée **au moyen d'un circuit sommateur** CS intégré dans la matrice 361 et a**ctivé par l'unité de traitement 39** lorsque la deuxième configuration 21 est sélectionnée. Le circuit sommateur CS reçoit en entrée les signaux de sortie des convertisseurs analogique/numérique 63.

Dans le mode de réalisation de la figure 4b, les signaux des pixels unitaires P₁ **d'un macro-**pixel P₂ sont sommés avant numérisation et après amplification (en sortie du convertisseur analogique/numérique 63). Le circuit sommateur CS reçoit en entrée les signaux de sortie des amplificateurs 62. La sortie du circuit **sommateur CS est connectée à l'un des** convertisseurs analogique/numérique 63 du groupe de pixels unitaires P₁ du macro-pixel P₂. Comparée à la figure 4a, on diminue le bruit de lecture dans la mesure où le signal délivré par un macro-pixel P₂ **ne subit qu'une** seule numérisation **avant d'être transmis à l'unité de** traitement 39.

Comparée à la première configuration 20 illustrée sur la figure 3, le nombre **de données transmises à l'unité de traitement 39 depuis la matrice 391, est** divisé **d'un facteur 2 sur les** **figures 4a** **et** **4b** **et plus généralement d'un facteur k**₂ précité. Le taux de **rafraîchissement ou cadence d'images (frame rate en anglais)** de la matrice 361 peut alors être multiplié par k₂.

**Dans le mode de réalisation de la** **figure 4c****, l'unité de traitement 39 reçoit les** signaux émis par **l'ensemble d**es pixels unitaires P₁ de la matrice 361. Les signaux associés aux pixels unitaires P₁ constituant un macro-pixel P₂ sont **sommés dans l'unité de traitement 39, par exemple au moyen d'une couche** logicielle. **Cette solution présente l'avantage de pouvoir utiliser une matrice 361** moins compl**exe que celles des** **figures 4a** **et** **4b** **(car n'intégrant pas l'étage** sommateur) et donc moins onéreuse.

La deuxième configuration 21 est définie pour **acquérir l'image d'**une deuxième **nature d'astre** de plus faible luminosité **qu'un** astre de première nature. À titre **d'exemple, on peut considérer que** ces astres de deuxième nature présentent une magnitude apparente **comprise entre 0 et 6. En effet, comme on l'a vu** précédemment, **l'utilisation de macro**-pixels P₂ de plus grande taille que les pixels unitaires P₁ permet de capter un plus grand rayonnement et donc de bénéficier **d'une plus grande luminosité.** Autrement dit le fait de regrouper k₂ pixels P₁ en un macro-pixel P₂ permet de gagner en luminosité. En contrepartie, on perd en résolution.

**La taille de l'astre peut** également être un critère pour sélectionner la deuxième configuration de capteurs optiques 21. Comme indiqué précédemment, les modes de réalisation des figures 4a et 4b **permettent d'augmenter le** taux de rafraîchissement de la matrice 361. Cela peut être particulièrement avantageux **lorsque l'image de l'astre observé est acquise en mode vidéo et que l'on souhaite** améliorer la fluidité de la vidéo observée. Pour un astre lumineux de grande taille tel que la lune ou le soleil, on privilégiera une bonne résolution (première configuration 20) pour une acquisition sous forme de clichés photographiques, mais un taux de rafraîchissement élevé (deuxième configuration 21) pour une visualisation en mode vidéo. De même, pour un astre de petite taille en mouvement **tel qu'une comète, on pourra privilégier un taux de rafraîchissement élevé** (deuxième configuration 21) pour une visualisation en mode vidéo.

La troisième configuration de capteurs optiques 22 est similaire à la deuxième configuration 21 en ce sens qu'**elle présente une pluralité m**₃ de macro-pixels P₃ formés par des regroupements de pixels unitaires P₁. Chaque macro-pixel P₃ est **toutefois formé par le regroupement d'un plus grand nombre de pixels unitaires** P₁. Selon un mode de réalisation, le nombre m₃ est tel que m₃=n/k₃ avec k₃ un nombre entier naturel supérieur à k₂. **Dans l'exemple de la** **figure** 1, ks=16 de sorte que m₃=9 (144/16). Chaque macro-pixel P₃ est ainsi formé par un regroupement de 16 pixels unitaires P₁. De manière plus générale, chaque macro-pixel P₃ est formé par un regroupement de k₃ pixels unitaires P₁. La taille **d'un macro-**pixel P₃ est alors k₃ **fois la taille d'un pixel unitaire P**₁.

Comme pour la deuxième configuration 21, les signaux délivrés par les pixels unitaires P₁ d'un macro-pixel P₃ de la troisième configuration 22 sont considérés **comme un unique signal global à traiter par l'unité de traitement 39. Lequel signal est proportionnel au nombre de photons incidents sur l'ensemble du groupe de** pixels unitaires P₁ formant le macro-pixel P₃.

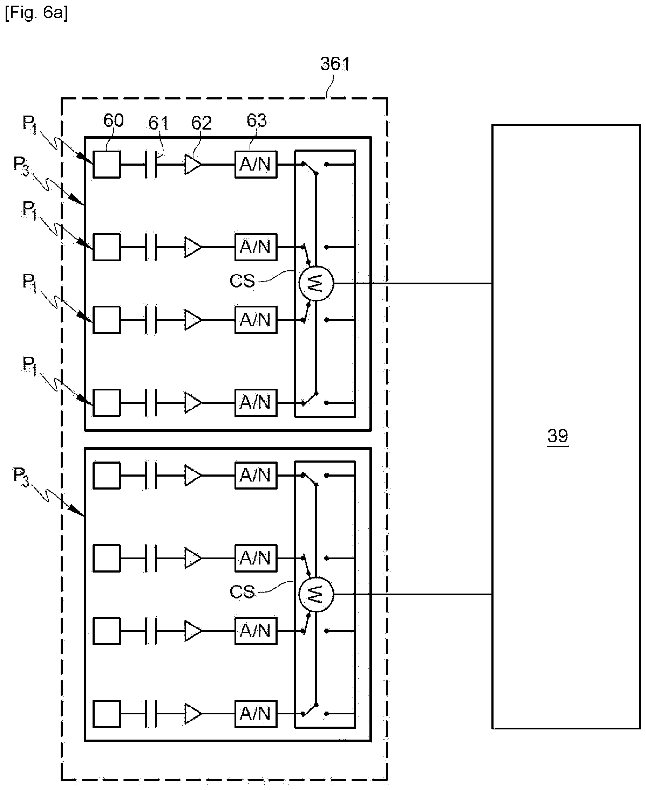

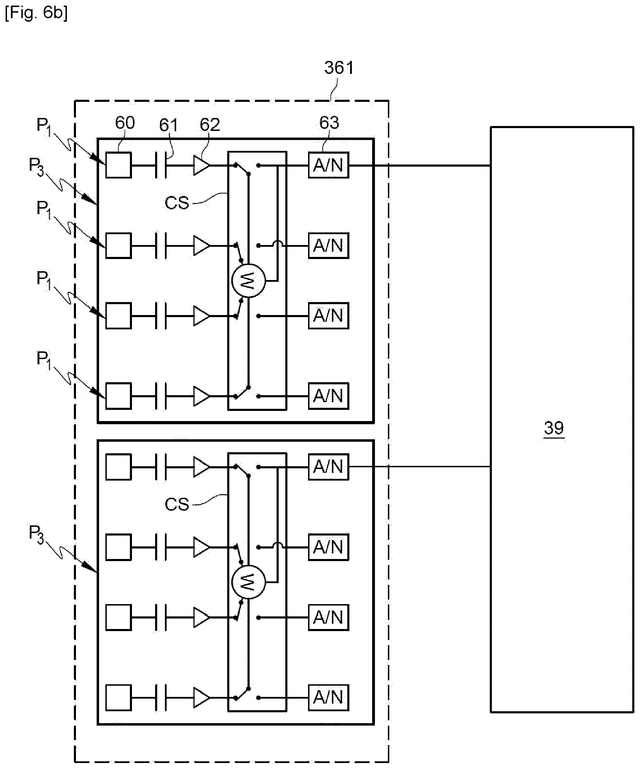

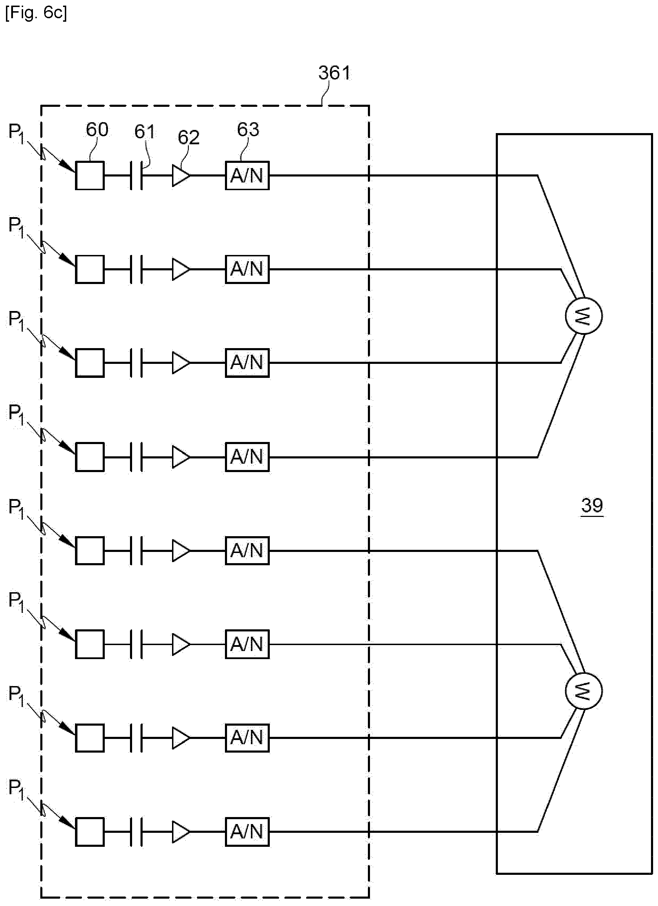

Les figures 6a, 6b et 6c illustrent différentes façons de traiter les signaux dans le cas de la troisième configuration 22. Deux macro-pixels P₂ sont représentés, chacun de ces macro-pixels étant formé par un groupe de quatre pixels unitaires P₁. Les modes de réalisation des figures 6a, 6b et 6c sont respectivement **similaires à ceux des** **figures 4a****,** **4b** **et** **4c****, sauf que c'est maintenant les signaux** de quatre pixels unitaires P₁ **d'un macro**-pixel P₃ qui sont sommés.

La troisième configuration 22 est dé**finie pour acquérir l'image d'une troisième nature d'astre**, notamment un astre **de plus faible luminosité qu'un astre de deuxième nature. À titre d'exemple, on peut considérer que ces astres de troisième** nature présentent une magnitude apparente supérieure à 6. La troisième configuration de capteurs optiques 22 peut également être sélectionnée en vue d'augmenter encore davantage le taux de rafraîchissement de la matrice 361 lors **d'une visualisation d'un astre en mode vidéo.**

On constate ainsi que pour une seule et même matrice 361, on dispose de plusieurs configurations 20, 21 et 22 de capteurs optiques qui permettent **d'acquérir** de manière optimum **des images d'astres de** natures différentes, ces natures étant fonction de la taille et/ou de la magnitude (luminos**ité) de l'astre** observé.

**Bien entendu, l'invention n'est pas limitée à l'utilisation de trois configurations** 20, 21 et 22 et peut prévoir un nombre plus important de configurations de capteurs optiques ou au contraire seulement deux. Dans ce dernier cas, la première configuration 20 peut par exemple être prévue pour des astres de magnitude apparente inférieure ou égale à 6 et la deuxième configuration pour des astres de magnitude apparente supérieure à 6. De la même manière, on **peut envisager d'appliquer l**'invention en utilisant plusieurs matrices 361, **chacune d'elles 361 présentant une taille, un nombre de pixels et une taille de** pixels **différentes les unes des autres pour l'observation de différentes natures d'astre**s, pour autant que ces différentes matric**es, ou au moins l'une d'entre** elles, présentent une pluralité de configurations de capteurs optiques pour **l'observation d'astre**s de natures différentes pour chacune de ces configurations.

Selon un mode de réalisation, une fois **qu'une** configuration est sélectionnée **en fonction de la nature de l'astre observé, la matrice 361 ne présente qu'une** seule taille de pixels. Ainsi, la matrice 361 présente uniquement des pixels unitaires P₁ lorsque la première configuration 20 est sélectionnée, ou uniquement des macro-pixels P₂ lorsque la deuxième configuration 21 est sélectionnée, ou uniquement des macro-pixels P₃ lorsque la troisième configuration 22 est sélectionnée.

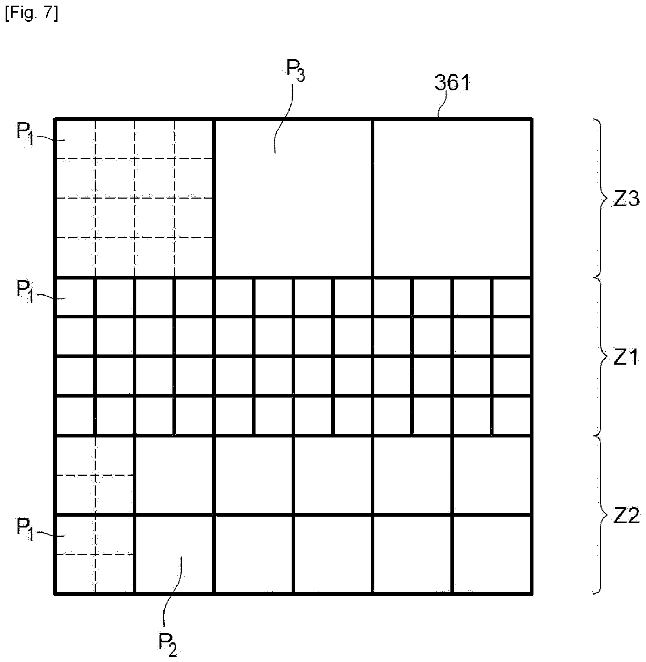

Selon une variante de réalisation, la matrice 361 présente simultanément plusieurs configurations. **C'est notamment le cas lorsque la scène d'étude** observée **comprend des astres de plusieurs natures. L'image formée dans le** foyer image 330 peut par exemple comprendre un astre de première nature (par exemple la planète Mars de magnitude apparente -2,9), un astre de deuxième nature (par exemple la planète Uranus de magnitude apparente 5,3) et un astre de troisième nature (par exemple une nébuleuse de magnitude apparente 9). Ainsi, et comme illustré sur la figure 7, la matrice 361 peut présenter simultanément :
- la première configuration 20 de pixels unitaires P₁ pour une zone Z1 **de l'image** dans laquelle est situé un astre de première nature ;
- la deuxième configuration 21 de macro-pixels P₂ pour une zone Z2 **de l'image** dans laquelle est situé un astre de deuxième nature ; et
- la troisième configuration 22 de macro-pixels P₃ pour une zone Z3 **de l'image** dans laquelle est situé un astre de troisième nature.

Dans la suite, on présente différents modes de sélection des configurations 20, 21, 22 de capteurs optiques.

Selon un mode de réalisation, la sélection se fait manuellement par **l'utilisateur.** Sur les figures 8 et 9, le télescope 30 présente des boutons poussoirs ou analogues 70, 71, 72 pour modifier la configuration 20, 21, 22 de capteurs optiques et **passer de l'une à l'autre successivement** ou directement. **Par exemple, l'activation du premier bouton 70, du deuxième bouton 71 ou du** troisième bouton 72, entraîne respectivement la sélection de la première configuration 20, de la deuxième configuration 21, ou de la troisième **configuration 22, par l'unité de traitement 39. Pour guider l'utilisateur dans la** sélection, ces boutons 70, 71, 72 peuvent être étiquetés avec des natures **d'astres. Par exemple, le premier bouton 70 peut** être associé aux indications **"p**lanè**tes/étoiles brillantes", le deuxième bouton 71 à "astres du** ciel **profond"** et le **troisième bouton 72 à** "galaxies**/nébuleuse".**

Le pilotage de la configuration de capteurs optiques 20, 21 ou 22 peut **également se faire en transmettant à l'unité de traitement** 39, des instructions de **commande émises depuis un Smartphone (téléphone intelligent) de l'utilisateur. Ces instructions sont par exemple émises suite à l'activation d'une ou plusieurs** touches dédiées affichée sur une interface graphique du Smartphone. Ces touches peuvent être étiquetées de la même façon que les boutons 70, 71, 72 décrits précédemment. Le Smartphone est adapté pour communiquer avec **l'unité de traitement 39 et lui transmettre les instructions de commande, par** exemple via une connexion Wifi^{®} ou Bluetooth^{®}. À la réception de ces **instructions de commande, l'unité de traitement 39 pilote la sélection de la** configuration de capteurs optiques 20, 21 ou 22.

Selon encore un autre mode de réalisation, la **sélection d'une configuration** 20, 21 ou 22 se fait de manière automatique. La configuration sélectionnée 20, **21 ou 22 est alors activée sans que l'utilisateur n'ait à intervenir. Différents cas d'activation automatique peuvent se présenter. Les cas présentés ci**-dessous ne **sont pas limitatifs de l'invention, d'autres utilisations pouvant être envisagées.**

**Dans un premier cas, l'utilisateur pointe son télescope 30 vers un**e scène **d'observation** correspondant à une portion **de la voûte céleste. L'unité de** traitement 39 est connectée à une base de données dans laquelle sont **enregistrés les astres principaux et connus de l'homme du métier. Cette base de** données peut être intégrée dans le télescope 30. Dans une variante de réalisation, la base de données est distante du télescope 30, par exemple hébergée dans u**n serveur distant auquel est connectée l'unité de traitement 39. La connexion de l'unité 39 à la base de données peut dans ce cas être réalisée au travers d'un réseau de communication de type interne, 3G, 4G, 5G, etc.**

**Chaque enregistrement d'astre est ass**ocié, dans la base de données, à une configuration de capteurs optiques 20, 21 ou 22 convenant le mieux à **l'observation dudit astre, par exemple en fonction de sa taille** et/ou de sa **luminosité et/ou d'une résolution numérique optimale. Chaque enregistrement est** en outre préférentiellement associé :
- **à un ou plusieurs éléments caractéristiques de l'astre correspondant, par** exemple à sa taille, son motif, sa luminosité, etc ; et/ou
- à des données de localisation (ou coordonnées célestes) dudit astre, en temps réel.

**L'utilisateur sélectionne un enregistrement d'astre dans la base de données et** le télescope 30 va lui**-même pointer vers ledit astre. L'unité de traitement 39 relève une donnée temporelle t correspondant à la période d'acquisition, c'est**-à-dire au **moment où l'utilisateur sélectionne l'enregistrement dans la base de données. L'unité de traitement 39 recherche ensuite dans la base de données les coordonnées célestes de l'astre à l'instant t.** Grâce à une corrélation des données de localisation terrestr**e du télescope 30, par exemple au moyen d'un** GPS (pour « Global Positioning System » ou assistant de navigation en français) **et des données d'orientation dudit télescope, par exemple au moyen d'un accéléromètre, l'unité de traitement 39 actionne un disposi**tif motorisé embarqué **permettant d'orienter automatiquement ledit télescope vers la localisation de l'astre 50, 51 sélectionné. L'unité de traitement 39 pilote ensuite ou en parallèle** la sélection de la configuration de capteurs optiques 20, 21 ou 22 associée à **l'enregistrement sélectionné et qui convient le mieux pour l'observation de cet astre. L'image peut alors être acquise de manière optimale.**

**Dans un deuxième cas, l'utilisateur observe un astre et acquiert son image** avec une configuration de capteurs optiques 20, 21 ou 22 optimale pour **l'observation de cet astre. Un autre astre se déplace dans le champ de vue (ou scène d'observation). L'utilisateur observe par exemple un astre de petite taille** 50 (une planète) avec la première configuration 20 active et un astéroïde passe **dans le champ de vue. L'unité de traitement 39 exécute un processus** informatique configuré pour détecter ce passage de cet autre astre dans la scène **d'observation. Ce processus est par exemple basé sur une dét**ection de mouvement. Il peut alors être avantageux de dézoomer pour élargir la scène **d'observation et observer plus longuement l'astéroïde** en mode vidéo avec un taux de rafraîchissement optimal de la matrice 361. La deuxième configuration 21 (ou la troisième configuration 22) est alors sélectionnée par l'**unité de traitement** 39. Ce changement automatique de configuration peut également être réalisé **lorsque l'utilisateur observe initialement un astre de grande taille 51 (avec la** troisième configuration 22 ac**tive) et qu'il est avantageux de zoomer pour restreindre la scène d'observation (activation de la première ou de la deuxième** configuration 20, 21).

**Dans un troisième cas, lorsque l'utilisateur pointe son télescope 30 vers un astre 50, 51 particulier, l'une** des configurations de capteurs optiques 20, 21, 22 **acquiert l'image dudit astre** et génère une représentation numérique de ladite image. Cette représentation numérique **est ensuite analysée par l'unité de** traitement 39.

Selon un mode de réalisation, cette analyse est réalisée en exécutant un processus informatique de reconnaissance configuré pour détecter au moins un **élément caractéristique, par exemple en mettant en oeuvre une analyse par seuillage. En cas de besoin, l'homme du métier pourra notamment se ré**férer aux documents brevets FR3054897 et/ou US2019196173 pour davantage de détails **sur un tel processus informatique de reconnaissance. Une fois l'élément caractéristique particulier détecté, l'unité de traitement 39 identifie, dans la base** de données, un **enregistrement d'astre associé à un élément caractéristique similaire à celui détecté. Dès qu'un élément caractéristique similaire est détecté, l'enregistrement de l'astre correspondant est identifié ainsi que la configuration** de capteurs optiques 20, 21 o**u 22 associée à cet enregistrement. L'unité de** traitement 39 sélectionne alors la configuration 20, 21 ou 22 associée à **l'enregistrement et transmet une instruction de commande ou de sélection pour** activer la configuration 20, 21 ou 22 correspondante. Si la configuration 20, 21 ou **22 ayant acquis l'image est la bonne, celle**-ci reste active. À **l'inverse, si la configuration 20, 21 ou 22 ayant acquis l'image n'est pas la bonne, alors l'unité** de traitement 39 sélectionne la bonne configuration de capteurs optiques 20, 21 **ou 22. L'image peut alors être acquise de manière optimale.**

**Selon un autre mode de réalisation, l'analyse de la représentation numérique** est réalisée en exécutant un processus informatique permettant de calculer une **valeur de la luminosité (ou magnitude apparente) de l'astre observé.** La sélection de la configuration 20, 21 ou 22 de capteurs optiques est alors réalisée en **fonction du résultat d'une comparaison de cette valeur calculée avec une ou des** valeurs seuils préenregistrées dans la base de données ou avec un ou des domaines de magnitudes seuils préenregistrés dans ladite base de données. Par exemple :
- si la valeur calculée correspond à une magnitude apparente inférieure à 0, la première configuration 20 est sélectionnée,
- si la valeur calculée correspond à une magnitude apparente comprise entre 0 et 6, la deuxième configuration 21 est sélectionnée,
- si la valeur calculée correspond à une magnitude apparente supérieure à 6, la troisième configuration 22 est sélectionnée.

**Si l'image acquise comprend plusieurs astres ayant des luminosités** différentes, plusieurs configurations peuvent être sélectionnées simultanément, chacune de ces configurations étant activée dans une zone distincte de la matrice 361 où est située **l'image de l'astre correspondant.**

**Selon encore un autre mode de réalisation, l'analyse de la représentation** numérique est réalisée en exécutant un processus informatique permettant de calculer une valeur de taille de l'**astre observé.** Cette valeur de taille est par exemple déterminée en dénombrant le nombre de pixels unitaires P₁ couvert par **l'image de l'astre sur la matrice 361.** La sélection de la configuration 20, 21 ou 22 de capteurs optiques est alors réalisée en fon**ction du résultat d'une comparaison** de cette valeur calculée avec une ou des valeurs seuils préenregistrées ou avec un ou des domaines de magnitudes seuils préenregistrés. Par exemple :
- **si l'image de l'astre couvre moins de 1000** pixels unitaires P₁, la première configuration 20 est sélectionnée,
- **si l'image de l'astre couvre entre 1000 et 10⁵** pixels unitaires P₁, la deuxième configuration 21 est sélectionnée,
- **si l'image de l'astre couvre plus de 10⁵** pixels unitaires P₁, la troisième configuration 22 est sélectionnée.

**Si l'image acquise comprend plusieurs astres ayant des tailles différentes,** plusieurs configurations peuvent être sélectionnées simultanément, chacune de ces configurations étant activée dans une zone distincte de la matrice 361 où est située **l'image de l'astre correspondant.**

**Selon encore un autre mode de réalisation, l'analyse de la représentation** numérique est réalisée en exécutant un processus informatique permettant de détecter un mouvement **de l'astre** observé. Si cet astre est lumineux, la première configuration 20 pourrait être sélectionnée par défaut. Mais si cet astre est en mouvement (par exemple une comète), alors la deuxième configuration 21 ou la troisième configuration 22 peuvent être automatiquement sélectionnées de façon à augmenter le taux de rafraîchissement de la matrice 361 et acquérir des images **de l'astre** en mode vidéo, comme expliqué précédemment.

**Si l'image acquise comprend des astres fixes et des astres en mouvement,** plusieurs configurations peuvent être sélectionnées simultanément, chacune de ces configurations étant activée dans une zone distincte de la matrice 361 où est **située l'image de l'astre correspondant.**

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En outre, une ou plusieurs caractéristiques et/ou étapes exposées seulement dans un mode de réalisation peuvent être généralisées aux autres modes de réalisation. De même, une ou plusieurs caractéristiques et/ou étapes exposées seulement dans un mode de réalisation peuvent être combinées avec une ou plusieurs autres caractéristiques et/ou étapes exposées seulement dans un autre mode de réalisation.

**L'usage du verbe « comporter », « comprendre » ou « inclure » et de ses formes conjuguées n'exclut pas la présence d'autres éléments ou d'autres** étapes que ceux énoncés dans une revendication.

Dans les revendications, tout signe de référence entre parenthèses ne saurait être interprété comme une limitation de la revendication.

## Revendications

1. Procédé **d'acquisition d'image d'**au moins un astre, comportant les étapes suivantes :
- utiliser un appareil (30) comportant un corps creux (302) **à l'intérieur duquel** pénètrent, en usage, des rayons lumineux (34) provenant **d'**au moins un astre observé, ledit astre observé étant choisi parmi au moins un premier astre (50) **d'**une première nature et un deuxième astre (51) **d'une deuxième nature**, la nature du premier astre (50) étant différente de la nature du deuxième astre (51),
- agencer, dans le corps creux (302), un système optique (31, 382, 383) présentant un axe optique, lequel système optique (31, 382, 383) est configuré de sorte que les rayons lumineux (34) forment, dans un foyer image (330) situé dans un plan focal (33), une image de l'astre observé,
- agencer dans le foyer image (330) une matrice (361) de capteurs optiques **pour acquérir l'image de l'astre observé, laquelle matrice présente une** pluralité n de pixels unitaires P₁,
**caractérisé en ce qu'**il comprend également les étapes suivantes :
- définir une première configuration (20) de capteurs optiques de la matrice (361) **pour acquérir l'image du premier astre (50) de première nature, ladite** première configuration présentant la pluralité n de pixels unitaires P₁, n étant un nombre entier naturel,
- définir au moins une deuxième configuration (21) de capteurs optiques de la matrice (361) **pour acquérir l'image du deuxième astre (51) de deuxième** nature, ladite deuxième configuration (21) présentant une pluralité m₂ de macro-pixels P₂ formés par des regroupements de pixels unitaires P₁, m₂ étant un nombre entier naturel,
- sélectionner une des configurations (20,21) de capteurs optiques pour **acquérir l'image de l'astre formée dans le foyer image (330)**, la sélection de la configuration de capteurs optiques étant réalisée en fonction de la nature de **l'astre observé, soit le susdit premier astre (50) de première nature soit le** susdit deuxième astre (51) de deuxième nature.

2. Procédé selon la revendication 1, consistant à définir la deuxième configuration (21) de capteurs optiques selon la formule m₂=n/k₂ avec k₂ un nombre entier naturel supérieur ou égal à 2.

3. **Procédé selon l'une des revendications 1 ou 2,** consistant à définir la deuxième configuration (21) de capteurs optiques selon la formule m₂=n/p₂² avec p₂ un nombre entier naturel supérieur ou égal à 2.

4. **Procédé selon l'une des revendications** précédentes, comprenant les étapes consistant à :
- **acquérir une image de l'astre observé au moyen de la matrice (361) de** capteurs optiques, et générer une représentation numérique de ladite image,
- analyser la représentation numérique pour calculer une valeur de la lu**minosité de l'astre observé,**
et dans lequel la sélection de la configuration (20, 21) de capteurs optiques est réalisée automatiquement en **fonction du résultat d'une comparaison de** cette valeur calculée avec une ou des valeurs seuils préenregistrées ou avec un ou des domaines de magnitudes seuils préenregistrés.

5. **Procédé selon l'une des revendications précédentes,** comprenant les étapes consistant à :
- **acquérir une image de l'astre observé au moyen de la matrice (361) de** capteurs optiques, et générer une représentation numérique de ladite image,
- analyser la représentation numérique pour calculer une valeur de la taille de **l'astre observé,**
et dans lequel la sélection de la configuration (20, 21) de capteurs optiques est réalisée automatiquement en fonction de la valeur calculée de la **luminosité de l'astre observé en la comparant à une ou des valeurs seuils** préenregistrées ou à un ou des domaines de magnitudes seuils préenregistrés.

6. **Procédé selon l'une des revendications précédentes,** comprenant les étapes consistant à :
- acquérir une image **d'**un premier astre (50) de première nature et **d'un** deuxième astre (51) de deuxième nature au moyen de la matrice (361) de capteurs optiques, **l'image de chaque astre étant située dans une zone** distincte de ladite matrice,
- générer une représentation numérique de l'image acquise,
- analyser la représentation numérique pour déterminer la première nature du premier astre et la deuxième nature du deuxième astre,
- sélectionner automatiquement la première configuration (20) de capteurs **optiques dans la zone de la matrice (361) où est située l'image du premier** astre de première nature et la deuxième configuration (21) de capteurs **optiques dans la zone de ladite matrice où est située l'image du deuxième** astre de deuxième nature, lesdites configurations étant sélectionnées simultanément.

7. **Procédé selon l'une quelconque des** revendications précédentes, comprenant les étapes consistant à :
- **enregistrer, dans une base de données, des enregistrements d'astres** (50, 51), chaque enregistrement étant associé à une configuration (20, 21) de **capteurs optiques ainsi qu'à des données de localisation en temps réel de l'astre et/ou à au moins un élément caractéristique de l'astre** (50, 51),
- **sélectionner, dans la base de données, un enregistrement d'**astre (50, 51),
- sélectionner la configuration (20, 21) de capteurs optiques associée à **l'enregistrement d'astre** (50, 51) sélectionné,
- **orienter automatiquement l'appareil** (30) **vers la localisation de l'astre** (50, 51), en fonction des données de **localisation associées à l'enregistrement** sélectionné.

8. Procédé **selon l'une quelconque des revendications** précédentes, comprenant les étapes consistant à :
- **acquérir une image d'un astre observé dans une scène d'observation** correspondant à une portion de la voute céleste, laquelle acquisition est **réalisée au moyen d'une des configurations** (20, 21) de capteurs optiques sélectionnée en fonction de la nature dudit astre (50, 51),
- exécuter un processus informatique configuré pour détecter le déplacement **d'un autre astre dans la scène d'observation,**
- **sélectionner l'autre configuration** (20, 21) de capteurs optiques correspondant audit autre astre.

9. Procédé selon l'**une quelconque des** revendications précédentes, comprenant les étapes consistant à :
- enregistrer, **dans une base de données, des enregistrements d'astres** (50, 51), chaque enregistrement étant associé à une des configurations (20, 21) **de capteurs optiques et à au moins un élément caractéristique de l'astre** (50, 51),
- **acquérir une image d'un astre** (50, 51), laquelle acquisition est réalisée au **moyen d'une des configurations** (20, 21) de capteurs optiques,
- exécuter un processus informatique de reconnaissance configuré pour **détecter, dans l'image acquise, au moins un élément caractéristique dudit** astre (50, 51),
- **identifier, dans la base de données, un enregistrement d'astre** (50, 51) associé à un élément caractéristique similaire à celui détecté,
- sélectionner la configuration (20, 21) de capteurs optiques associée à **l'enregistrement identifié,**
- si la configuration (20, 21) de capteurs optiques ayant acquise **l'image ne** correspond pas à la configuration (20, 21) de capteurs optiques sélectionnée, alors sélectionner cette dernière configuration (20, 21) de capteurs.

10. Appareil (30) **pour l'acquisition d'image d'un astre** (50, 51), comportant :
- un corps creux (302) **à l'intérieur duquel pénètrent, en usage, des rayons** lumineux (34) provenant **d**'au moins un astre observé, ledit astre observé étant choisi parmi au moins un premier astre (50) **d'une première nature et un** deuxième astre (51) **d'une deuxième nature, la nature du premier astre** (50) étant différente de la nature du deuxième astre (51),
- un système optique (31, 382, 383) agencé dans le corps creux (302) et présentant un axe optique, lequel système est configuré de sorte que les rayons lumineux (34) forment, dans un foyer image (330) situé dans un plan focal (33), **une image de l'**astre observé,
- une matrice (361) de capteurs optiques, disposée dans le foyer image (330), consistant en une pluralité n de pixels unitaires P₁,
**caractérisé en ce que l'appareil** (30) comporte :
- une première configuration (20) de capteurs optiques de la matrice (361) **pour acquérir l'image du premier astre (50) de première nature, ladite** première configuration présentant la pluralité n de pixels unitaires P₁, n étant un nombre entier naturel,
- une deuxième configuration (21) de capteurs optiques de la matrice (361) **pour acquérir l'image du deuxième astre (51) de deuxième nature, ladite** deuxième configuration (21) présentant une pluralité m₂ de macro-pixels P₂ formés par des regroupements de pixels unitaires P₁, m₂ étant un nombre entier naturel,
- une unité de traitement (39) adaptée pour sélectionner une des configurations (20, 21) de capteurs optiques **pour acquérir l'image de l'astre** formée dans le foyer image (330), la sélection de la configuration (20, 21) de **capteurs optiques étant réalisée en fonction de la nature de l'astre observé,** soit le susdit premier astre (50) de première nature soit le susdit deuxième astre (51) de deuxième nature.

11. Appareil selon la revendication 10, dans lequel les macro-pixel P₂ ont la même forme au sein de la deuxième configuration (21) de capteurs optiques.

12. Appareil selon la revendication 10, dans lequel les macro-pixel P₂ ont des formes différentes au sein de la deuxième configuration (21) de capteurs optiques.

13. **Appareil selon l'une des revendications 10 à 12, dans lequel l'unité de traitement (39) est adaptée pour sélectionner simultanément** la première configuration (20) de capteurs optiques dans une zone de la **matrice (361) où est située l'image d'un premier astre de première nature et la** deuxième configuration (21) de capteurs optiques dans une zone de ladite **matrice où est située l'image d'un deuxième astre de de**uxième nature.

14. **Appareil selon l'une des revendications 10 à 13, dans** lequel :
- chaque pixel unitaire P₁ délivre un signal représentatif d'une intensité lumineuse reçue,
- la matrice (361) intègre un circuit sommateur (CS) adapté pour sommer les signaux générés par les pixels unitaires P₁ **d'un macro-**pixel P₂ de sorte que les signaux délivrés par lesdits pixels unitaires d'un macro-pixel P₂ soient **considérés comme un unique signal global à traiter par l'unité de traitement** (39).

15. Appareil (30) selo**n l'une des** revendications 10 à 14, se **présentant sous la forme d'un télescope.**

## Patentansprüche

1. Verfahren zur Bilderfassung mindestens eines Gestirns, das die folgenden Schritte aufweist:
- ein Gerät (30) zu verwenden, das einen Hohlkörper (302) aufweist, in dessen Inneres bei Benutzung Lichtstrahlen (34) eindringen, die von mindestens einem beobachteten Gestirn stammen, wobei das beobachtete Gestirn unter mindestens einem ersten Gestirn (50) einer ersten Beschaffenheit und einem zweiten Gestirn (51) einer zweiten Beschaffenheit ausgewählt wird, wobei die Beschaffenheit des ersten Gestirns (50) sich von der Beschaffenheit des zweiten Gestirns (51) unterscheidet,
- ein optisches System (31, 382, 383) mit einer optischen Achse im Hohlkörper (302) anzuordnen, wobei das optische System (31, 382, 383) so konfiguriert ist, dass die Lichtstrahlen (34) in einem in einer Brennebene (33) befindlichen Bildbrennpunkt (330) ein Bild des beobachteten Gestirns formen,
- eine Matrix (361) von optischen Sensoren im Bildbrennpunkt (330) anzuordnen, um das Bild des beobachteten Gestirns zu erfassen, wobei die Matrix eine Vielzahl n von Einzelpixeln P₁ aufweist,
**dadurch gekennzeichnet, dass** es ebenfalls die folgenden Schritte enthält:
- eine erste Konfiguration (20) von optischen Sensoren der Matrix (361) zu definieren, um das Bild des ersten Gestirns (50) erster Beschaffenheit zu erfassen, wobei die erste Konfiguration die Vielzahl n von Einzelpixeln P₁ aufweist, wobei n eine natürliche ganze Zahl ist,
- mindestens eine zweite Konfiguration (21) von optischen Sensoren der Matrix (361) zu definieren, um das Bild des zweiten Gestirns (51) zweiter Beschaffenheit zu erfassen, wobei die zweite Konfiguration (21) eine Vielzahl m₂ von Makropixeln P₂ aufweist, die von Gruppierungen von Einzelpixeln P₁ geformt werden, wobei m₂ eine natürliche ganze Zahl ist,
- eine der Konfigurationen (20, 21) von optischen Sensoren auszuwählen, um das im Bildbrennpunkt (330) geformte Bild des Gestirns zu erfassen, wobei die Auswahl der Konfiguration von optischen Sensoren abhängig von der Beschaffenheit des beobachteten Gestirns, entweder des ersten Gestirns (50) erster Beschaffenheit oder des zweiten Gestirns (51) zweiter Beschaffenheit, durchgeführt wird.

2. Verfahren nach Anspruch 1, das darin besteht, die zweite Konfiguration (21) von optischen Sensoren gemäß der Formel m₂=n/k₂ zu definieren, mit k₂ einer natürlichen ganzen Zahl größer als oder gleich 2.

3. Verfahren nach einem der Ansprüche 1 oder 2, das darin besteht, die zweite Konfiguration (21) von optischen Sensoren gemäß der Formel m₂=n/p₂² zu definieren, mit p₂ einer natürlichen ganzen Zahl größer als oder gleich 2.

4. Verfahren nach einem der vorhergehenden Ansprüche, das die Schritte enthält, die darin bestehen:
- ein Bild des beobachteten Gestirns mittels der Matrix (361) von optischen Sensoren zu erfassen und eine digitale Darstellung des Bilds zu erzeugen,
- die digitale Darstellung zu analysieren, um einen Wert der Helligkeit des beobachteten Gestirns zu berechnen,
und wobei die Auswahl der Konfiguration (20, 21) von optischen Sensoren abhängig vom Ergebnis eines Vergleichs dieses berechneten Werts mit einem oder mehreren vorab gespeicherten Schwellenwerten oder mit einem oder mehreren vorab gespeicherten Bereichen von Schwellengrößen automatisch durchgeführt wird.

5. Verfahren nach einem der vorhergehenden Ansprüche, das die Schritte enthält, die darin bestehen:
- ein Bild des beobachteten Gestirns mittels der Matrix (361) von optischen Sensoren zu erfassen und eine digitale Darstellung des Bilds zu erzeugen,
- die digitale Darstellung zu analysieren, um einen Wert der Größe des beobachteten Gestirns zu berechnen,
und wobei die Auswahl der Konfiguration (20, 21) von optischen Sensoren abhängig vom berechneten Wert der Helligkeit des beobachteten Gestirns automatisch durchgeführt wird, indem er mit einem oder mehreren vorab gespeicherten Schwellenwerten oder mit einem oder mehreren vorab gespeicherten Bereichen von Schwellengrößen verglichen wird.

6. Verfahren nach einem der vorhergehenden Ansprüche, das die Schritte enthält, die darin bestehen:
- ein Bild eines ersten Gestirns (50) erster Beschaffenheit und eines zweiten Gestirns (51) zweiter Beschaffenheit mittels der Matrix (361) von optischen Sensoren zu erfassen, wobei das Bild jedes Gestirns sich in einer separaten Zone der Matrix befindet,
- eine digitale Darstellung des erfassten Bilds zu erzeugen,
- die digitale Darstellung zu analysieren, um die erste Beschaffenheit des ersten Gestirns und die zweite Beschaffenheit des zweiten Gestirns zu bestimmen,
- die erste Konfiguration (20) von optischen Sensoren in der Zone der Matrix (361), in der sich das Bild des ersten Gestirns erster Beschaffenheit befindet, und die zweite Konfiguration (21) von optischen Sensoren in der Zone der Matrix, in der sich das Bild des zweiten Gestirns zweiter Beschaffenheit befindet, automatisch auszuwählen, wobei die Konfigurationen gleichzeitig ausgewählt werden.

7. Verfahren nach einem der vorhergehenden Ansprüche, das die Schritte enthält, die darin bestehen:
- in einer Datenbank Gestirn-Datensätze (50, 51) zu speichern, wobei jeder Datensatz einer Konfiguration (20, 21) von optischen Sensoren sowie Echtzeit-Lokalisierungsdaten des Gestirns und/oder mindestens einem charakteristischen Element des Gestirns (50, 51) zugeordnet ist,
- in der Datenbank einen Gestirn-Datensatz (50, 51) auszuwählen,
- die Konfiguration (20, 21) von optischen Sensoren auszuwählen, die dem ausgewählten Gestirn-Datensatz (50, 51) zugeordnet ist,
- abhängig von den dem ausgewählten Datensatz zugeordneten Lokalisierungsdaten das Gerät (30) automatisch zu der Lokalisierung des Gestirns (50, 51) auszurichten.

8. Verfahren nach einem der vorhergehenden Ansprüche, das die Schritte enthält, die darin bestehen:
- ein Bild eines in einer Beobachtungsszene entsprechend einem Teil des Himmelsgewölbes beobachteten Gestirns zu erfassen, wobei die Erfassung mittels einer der Konfigurationen (20, 21) von optischen Sensoren durchgeführt wird, die abhängig von der Beschaffenheit des Gestirns (50, 51) ausgewählt wird,
- einen Informatikprozess auszuführen, der konfiguriert ist, die Verschiebung eines anderen Gestirns in der Beobachtungsszene zu erkennen,
- die andere Konfiguration (20, 21) von optischen Sensoren entsprechend dem anderen Gestirn auszuwählen.

9. Verfahren nach einem der vorhergehenden Ansprüche, das die Schritte enthält, die darin bestehen:
- in einer Datenbank Gestirn-Datensätze (50, 51) zu speichern, wobei jeder Datensatz einer der Konfigurationen (20, 21) von optischen Sensoren und mindestens einem charakteristischen Element des Gestirns (50, 51) zugeordnet ist,
- ein Bild eines Gestirns (50, 51) zu erfassen, wobei die Erfassung mittels einer der Konfigurationen (20, 21) von optischen Sensoren durchgeführt wird,
- einen Erkennungs-Informatikprozess auszuführen, der konfiguriert ist, im erfassten Bild mindestens ein charakteristisches Element des Gestirns (50, 51) zu erkennen,
- in der Datenbank einen Gestirn-Datensatz (50, 51) zu identifizieren, der einem charakteristischen Element gleich dem erkannten zugeordnet ist,
- die Konfiguration (20, 21) von optischen Sensoren auszuwählen, die dem identifizierten Datensatz zugeordnet ist,
- wenn die Konfiguration (20, 21) von optischen Sensoren, die das Bild erfasst hat, nicht der ausgewählten Konfiguration (20, 21) von optischen Sensoren entspricht, diese letztere Konfiguration (20, 21) von Sensoren auszuwählen.

10. Gerät (30) zur Bilderfassung eines Gestirns (50, 51), das aufweist:
- einen Hohlkörper (302), in dessen Inneres bei Benutzung Lichtstrahlen (34) eindringen, die von mindestens einem beobachteten Gestirn stammen, wobei das beobachtete Gestirn unter mindestens einem ersten Gestirn (50) einer ersten Beschaffenheit und einem zweiten Gestirn (51) einer zweiten Beschaffenheit ausgewählt wird, wobei die Beschaffenheit des ersten Gestirns (50) sich von der Beschaffenheit des zweiten Gestirns (51) unterscheidet,
- ein optisches System (31, 382, 383), das im Hohlkörper (302) angeordnet ist und eine optische Achse aufweist, wobei das System so konfiguriert ist, dass die Lichtstrahlen (34) in einem in einer Brennebene (33) befindlichen Bildbrennpunkt (330) ein Bild des beobachteten Gestirns formen,
- eine im Bildbrennpunkt (330) angeordnete Matrix (361) von optischen Sensoren, die aus einer Vielzahl n von Einzelpixeln P₁ besteht,
**dadurch gekennzeichnet, dass** das Gerät (30) aufweist:
- eine erste Konfiguration (20) von optischen Sensoren der Matrix (361), um das Bild des ersten Gestirns (50) erster Beschaffenheit zu erfassen, wobei die erste Konfiguration die Vielzahl n von Einzelpixeln P₁ aufweist, wobei n eine natürliche ganze Zahl ist,
- eine zweite Konfiguration (21) von optischen Sensoren der Matrix (361), um das Bild des zweiten Gestirns (51) zweiter Beschaffenheit zu erfassen, wobei die zweite Konfiguration (21) eine Vielzahl m₂ von Makropixeln P₂ aufweist, die von Gruppierungen von Einzelpixeln P₁ geformt werden, wobei m₂ eine natürliche ganze Zahl ist,
- eine Verarbeitungseinheit (39), die geeignet ist, eine der Konfigurationen (20, 21) von optischen Sensoren auszuwählen, um das im Bildbrennpunkt (330) geformte Bild des Gestirns zu erfassen, wobei die Auswahl der Konfiguration (20, 21) von optischen Sensoren abhängig von der Beschaffenheit des beobachteten Gestirns, entweder des ersten Gestirns (50) erster Beschaffenheit oder des zweiten Gestirns (51) zweiter Beschaffenheit, durchgeführt wird.

11. Gerät nach Anspruch 10, wobei die Makropixel P₂ innerhalb der zweiten Konfiguration (21) von optischen Sensoren die gleiche Form haben.

12. Gerät nach Anspruch 10, wobei die Makropixel P₂ innerhalb der zweiten Konfiguration (21) von optischen Sensoren unterschiedliche Formen haben.

13. Gerät nach einem der Ansprüche 10 bis 12, wobei die Verarbeitungseinheit (39) geeignet ist, gleichzeitig die erste Konfiguration (20) von optischen Sensoren in einer Zone der Matrix (361), in der sich das Bild eines ersten Gestirns erster Beschaffenheit befindet, und die zweite Konfiguration (21) von optischen Sensoren in einer Zone der Matrix auszuwählen, in der sich das Bild eines zweiten Gestirns zweiter Beschaffenheit befindet.

14. Gerät nach einem der Ansprüche 10 bis 13, wobei:
- jedes Einzelpixel P₁ ein für eine empfangene Lichtstärke repräsentatives Signal liefert,
- die Matrix (361) einen Summierschaltkreis (CS) umfasst, der geeignet ist, die von den Einzelpixeln P₁ eines Makropixels P₂ erzeugten Signale zu summieren, so dass die von den Einzelpixeln eines Makropixels P₂ gelieferten Signale als ein einziges globales Signal angesehen werden, das von der Verarbeitungseinheit (39) zu verarbeiten ist.

15. Gerät (30) nach einem der Ansprüche 10 bis 14, das in Form eines Teleskops vorliegt.

## Claims

1. Method for acquiring an image of at least one celestial body, comprising the following steps:
- using a device (30) comprising a hollow body (302) into which light rays (34) coming from at least one celestial body under observation enter during use, said celestial body under observation being chosen from among at least a first celestial body (50) of a first nature and a second celestial body (51) of a second nature, the nature of the first celestial body (50) being different from the nature of the second celestial body (51),
- arranging an optical system (31, 382, 383) having an optical axis in the hollow body (302), which optical system (31, 382, 383) is configured such that the light rays (34) form an image of the celestial body under observation in an image focus (330) located in a focal plane (33),
- arranging a matrix (361) of optical sensors in the image focus (330) in order to acquire the image of the celestial body under observation, which matrix has a plurality n of unitary pixels P₁,
**characterized in that** it also comprises the following steps:
- defining a first configuration (20) of optical sensors of the matrix (361) so as to acquire the image of the first celestial body (50) of a first nature, said first configuration having the plurality n of unitary pixels P₁, n being a natural integer,
- defining at least one second configuration (21) of optical sensors of the matrix (361) so as to acquire the image of the second celestial body (51) of a second nature, said second configuration (21) having a plurality m₂ of macro-pixels P₂ formed by groups of unitary pixels P₁, m₂ being a natural integer,
- selecting one of the configurations (20, 21) of optical sensors to acquire the image of the celestial body formed in the image focus (330), the configuration of optical sensors being selected on the basis of the nature of the celestial body under observation, either the abovementioned first celestial body (50) of a first nature or the abovementioned second celestial body (51) of a second nature.

2. Method according to Claim 1, consisting in defining the second configuration (21) of optical sensors according to the formula m₂=n/k₂, where k₂ is a natural integer greater than or equal to 2.

3. Method according to either of Claims 1 and 2, consisting in defining the second configuration (21) of optical sensors according to the formula m₂=n/p₂², where p₂ is a natural integer greater than or equal to 2.

4. Method according to one of the preceding claims, comprising the following steps:
- acquiring an image of the celestial body under observation by way of the matrix (361) of optical sensors, and generating a digital representation of said image,
- analysing the digital representation in order to compute a value of the brightness of the celestial body under observation,
and wherein the configuration (20, 21) of optical sensors is selected automatically on the basis of the result of a comparison of this computed value with one or more pre-recorded threshold values or with one or more pre-recorded threshold magnitude domains.

5. Method according to one of the preceding claims, comprising the following steps:
- acquiring an image of the celestial body under observation by way of the matrix (361) of optical sensors, and generating a digital representation of said image,
- analysing the digital representation in order to compute a value of the size of the celestial body under observation,
and wherein the configuration (20, 21) of optical sensors is selected automatically on the basis of the computed value of the brightness of the celestial body under observation by comparing it with one or more pre-recorded threshold values or with one or more pre-recorded threshold magnitude domains.

6. Method according to one of the preceding claims, comprising the following steps:
- acquiring an image of a first celestial body (50) of a first nature and of a second celestial body (51) of a second nature by way of the matrix (361) of optical sensors, the image of each celestial body being located in a distinct area of said matrix,
- generating a digital representation of the acquired image,
- analysing the digital representation in order to determine the first nature of the first celestial body and the second nature of the second celestial body,
- automatically selecting the first configuration (20) of optical sensors in the area of the matrix (361) in which the image of the first celestial body of a first nature is located, and the second configuration (21) of optical sensors in the area of said matrix in which the image of the second celestial body of a second nature is located, said configurations being selected simultaneously.

7. Method according to any one of the preceding claims, comprising the following steps:
- recording records of celestial bodies (50, 51) in a database, each record being associated with a configuration (20, 21) of optical sensors and with real-time location data in relation to the celestial body and/or with at least one characteristic element of the celestial body (50, 51),
- selecting a celestial body (50, 51) record in the database,
- selecting the configuration (20, 21) of optical sensors associated with the selected celestial body (50, 51) record,
- automatically pointing the device (30) at the location of the celestial body (50, 51), on the basis of the location data associated with the selected record.

8. Method according to any one of the preceding claims, comprising the following steps:
- acquiring an image of a celestial body under observation in an observation scene corresponding to a portion of the celestial sphere, which acquisition is carried out by way of one of the configurations (20, 21) of optical sensors, selected on the basis of the nature of said celestial body (50, 51),
- carrying out a computerized process configured to detect the movement of another celestial body in the observation scene,
- selecting the other configuration (20, 21) of optical sensors corresponding to said other celestial body.

9. Method according to any one of the preceding claims, comprising the following steps:
- recording records of celestial bodies (50, 51) in a database, each record being associated with one of the configurations (20, 21) of optical sensors and with at least one characteristic element of the celestial body (50, 51),
- acquiring an image of a celestial body (50, 51), which acquisition is carried out by way of one of the configurations (20, 21) of optical sensors,
- carrying out a computerized recognition process configured to detect, in the acquired image, at least one characteristic element of said celestial body (50, 51),
- identifying, in the database, a celestial body (50, 51) record associated with a characteristic element similar to the one detected,
- selecting the configuration (20, 21) of optical sensors associated with the identified record,
- if the configuration (20, 21) of optical sensors that acquired the image does not correspond to the selected configuration (20, 21) of optical sensors, then selecting this last configuration (20, 21) of sensors.

10. Device (30) for acquiring an image of a celestial body (50, 51), comprising:
- a hollow body (302) into which light rays (34) coming from at least one celestial body under observation enter during use, said celestial body under observation being chosen from among at least a first celestial body (50) of a first nature and a second celestial body (51) of a second nature, the nature of the first celestial body (50) being different from the nature of the second celestial body (51),
- an optical system (31, 382, 383) arranged in the hollow body (302) and having an optical axis, which system is configured such that the light rays (34) form an image of the celestial body under observation in an image focus (330) located in a focal plane (33),
- a matrix (361) of optical sensors, arranged in the image focus (330), consisting of a plurality n of unitary pixels P₁,
**characterized in that** the device (30) comprises:
- a first configuration (20) of optical sensors of the matrix (361) so as to acquire the image of the first celestial body (50) of a first nature, said first configuration having the plurality n of unitary pixels P₁, n being a natural integer,
- a second configuration (21) of optical sensors of the matrix (361) so as to acquire the image of the second celestial body (51) of a second nature, said second configuration (21) having a plurality m₂ of macro-pixels P₂ formed by groups of unitary pixels P₁, m₂ being a natural integer,
- a processing unit (39) designed to select one of the configurations (20, 21) of optical sensors to acquire the image of the celestial body formed in the image focus (330), the configuration (20, 21) of optical sensors being selected on the basis of the nature of the celestial body under observation, either the abovementioned first celestial body (50) of a first nature or the abovementioned second celestial body (51) of a second nature.

11. Device according to Claim 10, wherein the macro-pixels P₂ have the same shape within the second configuration (21) of optical sensors.

12. Device according to Claim 10, wherein the macro-pixels P₂ have different shapes within the second configuration (21) of optical sensors.

13. Device according to one of Claims 10 to 12, wherein the processing unit (39) is designed to simultaneously select the first configuration (20) of optical sensors in an area of the matrix (361) in which the image of a first celestial body of a first nature is located and the second configuration (21) of optical sensors in an area of said matrix in which the image of a second celestial body of a second nature is located.

14. Device according to one of Claims 10 to 13, wherein:
- each unitary pixel P₁ delivers a signal representative of a received luminous intensity,
- the matrix (361) incorporates a summer circuit (CS) designed to sum the signals generated by the unitary pixels P₁ of a macro-pixel P₂ such that the signals delivered by said unitary pixels of a macro-pixel P₂ are considered to be a single global signal to be processed by the processing unit (39).

15. Device (30) according to one of Claims 10 to 14, in the form of a telescope.
